(19) Europäisches Patentamt / European Patent Office / Office européen des brevets

(11) **EP 2 225 849 B1**

(12) **FASCICULE DE BREVET EUROPEEN**

(45) Date de publication et mention de la délivrance du brevet:
**15.07.2020 Bulletin 2020/29**

(21) Numéro de dépôt: **08864656.7**

(22) Date de dépôt: **10.12.2008**

(51) Int Cl.:
***H04L 9/32*** *(2006.01)*

(86) Numéro de dépôt international:
**PCT/FR2008/052271**

(87) Numéro de publication internationale:
**WO 2009/080992 (02.07.2009 Gazette 2009/27)**

(54) **CONTROLE D'UNE ENTITE A CONTROLER PAR UNE ENTITE DE CONTROLE**

STEUERUNG EINER VON EINER STEUEREINHEIT ZU STEUERNDEN EINHEIT

CONTROL OF AN ENTITY TO BE CONTROLLED BY A CONTROL ENTITY

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **12.12.2007 FR 0708662**

(43) Date de publication de la demande:
**08.09.2010 Bulletin 2010/36**

(73) Titulaire: **Idemia Identity & Security France
92400 Courbevoie (FR)**

(72) Inventeurs:
• **CHABANNE, Hervé**
  **F-75015 Paris (FR)**
• **BRINGER, Julien**
  **F-75015 Paris (FR)**
• **ICART, Thomas**
  **F-75015 Paris (FR)**

(74) Mandataire: **Plasseraud IP
66, rue de la Chaussée d'Antin
75440 Paris Cedex 09 (FR)**

(56) Documents cités:
**WO-A-03/055134**

• **JULIEN BRINGER, HERVE CHABANNE AND THOMAS ICART: "identification and privacy: zero knowledge is not enough" IACR, [Online] 20 mai 2008 (2008-05-20), page 1, XP002490813 iacr web site Extrait de l'Internet: URL:http://eprint.iacr.org/2008/229> [extrait le 2008-07-28]**

• **VAUDENAY S: "E-Passport Threats", SECURITY & PRIVACY, IEEE, IEEE SERVICE CENTER, LOS ALAMITOS, CA, US, vol. 5, no. 6, 1 November 2007 (2007-11-01), pages 61-64, XP011198845, ISSN: 1540-7993, DOI: 10.1109/MSP.2007.164**
• **CALMELS BENOÎT ET AL: "Low-Cost Cryptography for Privacy in RFID Systems", 19 April 2006 (2006-04-19), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 237 - 251, XP047389582, ISSN: 0302-9743 ISBN: 978-3-642-19166-4**
• **Dennis Kügler: "Technical Report Advanced Security Mechanisms for Machine Readable Travel Documents", , 14 January 2005 (2005-01-14), XP055555429, Bonn Retrieved from the Internet: URL:https://www.bsi.bund.de/DE/Home/home_node.html [retrieved on 2019-02-12]**
• **Bsi - Bundesamt Für Sicherheit In Der Informationstechnik: "Technical Guideline Advance security mechanisms for Machine Readable Travle documents- Extended Access Control (EAC) Version1.0 TR-03110", , 1 January 2006 (2006-01-01), XP055555444, Bonn Retrieved from the Internet: URL:https://www.bsi.bund.de/DE/Home/home_node.html [retrieved on 2019-02-12]**

**Description**

La présente invention concerne un contrôle d'une entité à contrôler, cette entité pouvant être une entité à puce électronique, et plus particulièrement une entité à puce électronique opérant sans contact.

Dans le présent contexte, on entend par le terme 'contrôle', une opération de type authentification de la puce électronique ou encore identification de la puce électronique. De manière générale, un contrôle d'une puce électronique correspond à toute opération qui permet à une entité de contrôle de vérifier que la puce électronique est en mesure de prouver la connaissance d'un secret.

Un tel contrôle peut être fait relativement à un passeport électronique ou encore à une étiquette de type RFID (pour 'Radio Frequency IDentification').

Certains de ces contrôles sont basés sur des schémas de contrôle cryptographique asymétrique utilisant un couple de clé publique et clé privée. On connaît notamment le système d'identification décrit dans le document 'About machine-readable travel documents' de Vaudenay, S.; Vuagnoux, M. publié au Journal of Physics: Conférence Series, Volume 77, Issue 1, pp. 012006 (2007), en juillet 2007, pour lequel il est proposé d'utiliser des protocoles de type 'zero-knowledge', c'est-à-dire ne révélant aucune information sur le secret de l'utilisateur et ainsi ne permettant pas a priori à un attaquant potentiel de suivre l'utilisateur.

Toutefois, l'utilisation de tels protocoles peut révéler des informations sur la clé publique associée à l'utilisateur à ce potentiel attaquant même si ce dernier n'a aucune information préalable à ce sujet. Ainsi, un attaquant peut obtenir des informations sur l'utilisateur d'une telle puce électronique en écoutant les échanges d'informations entre cette puce électronique et une entité de contrôle. L'accès à certaines de ces informations peut permettre à une personne mal intentionnée de porter atteinte à la vie privée de l'utilisateur d'une telle puce électronique, par exemple en lui permettant de retracer les mouvements de cette puce électronique.

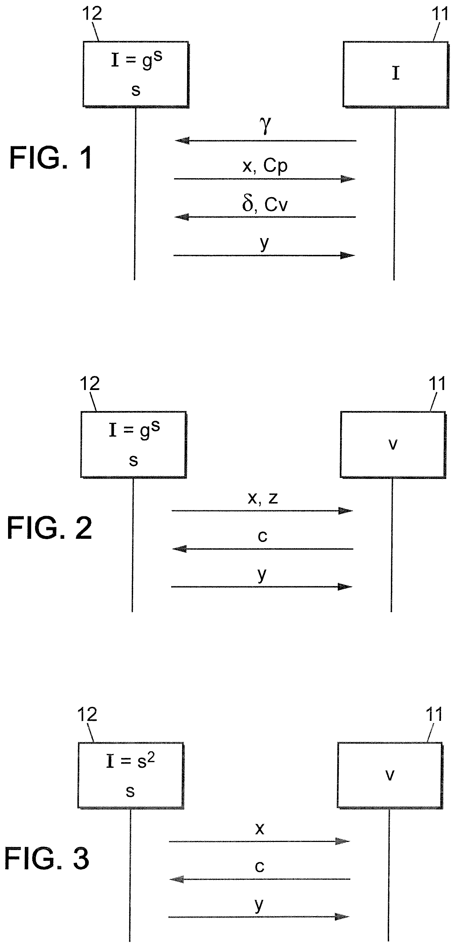

La figure 1 illustre un mode de réalisation de l'art antérieur. De manière plus précise, dans le document cité ci-dessus, il est prévu que le système de contrôle comprenne une entité à contrôler 12 d'un côté et une entité de contrôle 11 de l'autre.

Un paramètre public de ce système est noté g, et correspond au générateur de l'ensemble des valeurs dans lequel les calculs sont effectués. L'entité à contrôler 12 dispose d'une clé publique I et d'une clé secrète s. La clé publique I vérifie l'équation suivante :

$$I = g^s$$

L'entité de contrôle 11 génère de manière aléatoire une valeur $c_v$.

L'entité de contrôle 11 transmet à l'entité à contrôler 12 une valeur $\gamma$ issue de la valeur aléatoire $c_v$.

L'entité à contrôler 12 génère de manière aléatoire une valeur r, et une valeur $c_p$.

Puis, elle transmet à l'entité de contrôle 11 les valeurs suivantes :

x, qui correspond à $g^r$ ; et
$c_p$.

L'entité de contrôle 11 transmet alors les valeurs suivantes :

$\delta$ et $c_v$
$\delta$, et $\gamma$ étant générées en même temps à partir de la valeur $c_v$.

L'entité à contrôler contrôle la cohérence des valeurs $\delta$, $\gamma$ et $c_v$.

Elle transmet ensuite une valeur y vérifiant :

$$y = r + cs,$$

où

$$c = c_p + c_v$$

De l'autre côté, l'entité de contrôle 11 contrôle que l'équation suivante est vérifiée :

$$g^y = x \, I^c$$

Ainsi, en écoutant les échanges entre l'entité de contrôle 11 et l'entité à contrôler 12, on peut obtenir la valeur de $I^c$ et de c selon les équations suivantes :

$$I^c = g^y/x \; ;$$

et

$$c = c_v + c_p$$

Puis, une autre écoute permet d'obtenir une valeur $I'^{c'}$ et c'.

Ensuite, si l'équation suivante est vérifiée, on peut en déduire que les deux écoutes correspondent à la même entité à contrôler 12, et révèle donc des informations relatives à cette entité à contrôler :

$$I^{cc'} = I'^{c'c}$$

Ainsi, l'utilisation de protocoles de type Schnorr, Fiat-Shamir ou encore GPS (pour Girault, Poupard et Stern) permettent d'obtenir des informations que l'on souhaiterait pourtant conserver secrètes.

Le document WO 03/055134 décrit une méthode visant à contrôler, par une entité de contrôle, une entité à contrôler à laquelle sont associées une clé secrète et une clé publique. Dans ce contexte, il est impossible de maintenir secrètes toute information liée à l'entité à contrôler.

Dans le domaine de la sécurité des documents de voyage lisibles par machine, on connait également les documents suivants :

- "Technical Report - Advanced Security Mechanisms for Machine Readable Travel Documents", Federal Office for Information Security (BSI),
- "Technical Guideline - Advanced Security Mechanisms for Machine Readable Travel Documents - Extended Access Control (EAC), Version 1.0", TR-03110, Federal Office for Information Security (BSI).

La présente invention vise à améliorer la situation. La présente invention est définie par les revendications.

Un premier aspect de la présente invention propose un procédé de contrôle d'une entité à contrôler par une entité de contrôle,
une clé secrète étant associée à l'entité de contrôle ;
lesdites entité à contrôler et entité de contrôle partageant une pluralité de paramètres publics, un second paramètre public de ladite pluralité étant une combinaison d'un premier paramètre public de ladite pluralité avec la clé secrète de l'entité de contrôle;
ledit procédé comprenant les étapes suivantes au niveau de l'entité à contrôler :

/a/ générer au moins une valeur aléatoire ;
/b/ transmettre un premier message à l'entité de contrôle, ledit premier message comprenant au moins une valeur combinée obtenue en combinant le premier paramètre public avec la valeur aléatoire ; et
/c/ transmettre un second message à l'entité de contrôle, ledit second message comprenant au moins une valeur combinée obtenue en combinant la valeur aléatoire, une clé secrète de l'entité à contrôler et une valeur reçue depuis l'entité de contrôle ;

dans lequel une des valeurs comprises dans le premier ou le second message est basée sur le second paramètre public.

On affecte ici avantageusement une clé secrète à l'entité de contrôle qui est utilisée pour l'obtention d'un des paramètres publics partagés entre l'entité de contrôle et l'entité à contrôler. Grâce à ces dispositions, il est possible de maintenir secrètes toutes informations liées à l'entité à contrôler même si les échanges entre l'entité de contrôle et l'entité à contrôler sont écoutés. En effet, sans la connaissance de la clé secrète de l'entité de contrôle, aucune information sur l'entité à contrôler ne peut être révélée sur la base des échanges effectués entre ces deux entités selon un mode de réalisation de la présente invention.

La présente invention peut avantageusement être mise en œuvre dans de nombreux domaines. A titre d'exemple non limitatif, on peut citer les domaines d'application des cartes à puce, comme des passeports électroniques, des étiquettes RFID, et de manière plus générale le domaine des transactions électroniques.

On peut prévoir que des première et seconde valeurs aléatoires sont générées à l'étape /a/ et que la valeur basée sur le second paramètre public est en outre basée sur la seconde valeur aléatoire et est transmise dans le premier message. Dans ce cas, on transmet à l'entité de contrôle la valeur issue d'une combinaison avec le second paramètre public au début de l'échange de messages.

Un tel mode de réalisation peut avantageusement être mis en œuvre dans le contexte de protocole de type Schnorr, tel que défini dans le document de Schnorr 'Efficient signature génération by smart cards' de Journal of Cryptology 1991.

La première valeur combinée peut être obtenue en calculant le premier paramètre public à la puissance de la première valeur aléatoire et la seconde valeur combinée peut être obtenue en calculant le second paramètre public à la puissance de la seconde valeur aléatoire. La troisième valeur combinée peut être obtenue en sommant les valeurs suivantes :

- la première valeur aléatoire,
- la seconde valeur aléatoire, et
- le produit de la clé secrète de l'entité à contrôler avec la valeur reçue depuis l'entité de contrôle.

En procédant ainsi, on tire avantageusement parti de la clé secrète de l'entité de contrôle dans les valeurs combinées émises depuis l'entité à contrôler vers l'entité de contrôle. En effet, sur la base de ces valeurs il n'est pas possible d'opérer un quelconque contrôle de l'identité de l'entité à contrôler si on ne détient pas la clé secrète de l'entité de contrôle.

On peut alors décider que l'entité à contrôler est contrôlée sur la base de l'équation suivante :

$$J = \left((g^v)^y \, x^{-v} \, z^{-1}\right)^{1/vc}$$

où J est la clé publique de l'entité à contrôler ou une valeur dans une base de données accessible depuis l'entité de contrôle ;
où g est le premier paramètre public ;
où $g^v$ est le second paramètre public ;
où x est la valeur combinée transmise dans le premier message ;

où y est la valeur combinée transmise dans le second message ;

où z est la valeur basée sur le second paramètre public;

où c est la valeur reçue depuis l'entité de contrôle ;

où v est la clé secrète de l'entité de contrôle.

Ainsi, sur la base de l'équation ci-dessus, on est en mesure soit d'authentifier l'entité à contrôler dans le cas où l'entité de contrôle connaît la clé publique I de l'entité à contrôler, soit d'identifier cette entité à contrôler dans le cas où l'entité de contrôle a accès à une base de données contenant au moins cette clé publique I.

On peut également prévoir de borner les valeurs aléatoires, la clé secrète de l'entité à contrôler, ainsi que la valeur reçue depuis l'entité de contrôle entre 0 et des valeurs définies respectives. Dans ce cas, le procédé selon un mode de réalisation de la présente invention trouve aisément une application avantageusement dans le contexte d'un protocole de type GPS, tel que défini par exemple dans le document 'On the fly authentification and signature schemes based on groups of unknown order' de Girault, Poupard, Stern du Journal of Cryptology 2006.

On peut prévoir que les première et seconde valeurs aléatoires sont comprises entre 0 et A-1 ; la valeur reçue depuis l'entité de contrôle est comprise entre 0 et B-1 ; et la clé secrète de l'entité à contrôler est comprise entre 0 et S-1 ; où A, B et S sont paramètres publics. Dans ces conditions l'entité à contrôler peut être contrôlée en outre sur la base de l'inéquation suivante :

$$0 \leq y \leq 2(A-1)+(B-1)(S-1)$$

Ainsi, il est aisé de se baser sur un procédé de contrôle selon un mode de réalisation de la présente invention afin d'en déduire un procédé d'authentification ou d'identification qui préserve la confidentialité de l'entité à contrôler.

Dans un mode de réalisation de la présente invention, on décide que l'entité à contrôler est contrôlée sur la base de l'équation suivante :

$$J^{vc} = \frac{(g_1^v)^{y1}(g_2^v)^{y2}}{x^v z}$$

où J est la clé publique de l'entité à contrôler ou une valeur dans une base de données accessible depuis l'entité de contrôle ;

où $g_1$ et $g_2$ sont deux premiers paramètres publics ;

où $g_1^v$ et $g_2^v$ sont deux seconds paramètres publics ;

où v est une clé secrète de l'entité de contrôle ;

où x et z sont des valeurs transmises dans le premier message et vérifient respectivement les équations suivantes :

$$x = g_1^{r1} \cdot g_2^{r2}$$

$$z = g_1^{vr'1} \cdot g_2^{vr'2}$$

où $y_1$ et $y_2$ sont des valeurs transmises dans le second message et vérifient les équations respectives :

$$y_1 = r_1 + s_1\ c + r'_1$$

$$y_2 = r_2 + s_2\ c + r'_2$$

où $s_1$ et $s_2$ sont des clés secrètes de l'entité à contrôler ;

où r1, r2, r'1 et r'2 sont des valeurs aléatoires générées à l'étape /a/.

Ici, avantageusement on peut donc appliquer la présente invention dans le contexte de protocole de type Okamoto tel que défini dans le document 'Provably secure and practical identification schemes and corresponding signature schemes' de T. Okamoto daté de 1992.

On peut alternativement prévoir que la valeur basée sur le second paramètre public est en outre basée sur la valeur aléatoire et est transmise dans le second message.

Ici, on est en mesure d'appliquer avantageusement la présente invention au protocole de type Fiat-Shamir, tel que défini dans le document de Fiat et Shamir 'How to prove yourself : pratical solutions of identification and signature problems', de Proceedings of Crypto 1986, et dans le document 'A modification of the Fiat Shamir scheme' Proceedings of Crypto 1988.

Dans ce contexte, on peut décider que l'entité à contrôler est contrôlée sur la base de l'équation suivante:

$$y^2\ x^{-v} = J^c$$

où J est la clé publique de l'entité à contrôler ou une valeur dans une base de données accessible depuis l'entité de contrôle ;

où y est la valeur (y) basée sur le second paramètre public et vérifie l'équation :

$$y = (g^v)^{r1} s^c$$

où $g^v$ est le second paramètre public, r1 est la valeur aléatoire, s la clé secrète de l'entité à contrôler et c la valeur reçue depuis l'entité de contrôle ;

où x est la valeur obtenue à l'étape /b/ et vérifie l'équation :

$$x = g^{2r1}$$

où v est la clé secrète de l'entité de contrôle.

On est également en mesure d'appliquer avantageusement la présente invention au protocole de type GQ, tel que défini dans le document 'A paradoxical identity-based signature scheme resulting from Zero-Knowledge minimizing both transmission and memory' de Proceedings of Crypto 1988, de Guillou et Quisquater.

Dans ce contexte, on peut décider que l'entité à contrôler est contrôlée sur la base de l'équation suivante:

$$y^{-W}x^{v}=J^{c}$$

où J est la clé publique de l'entité à contrôler ou une valeur dans une base de données accessible depuis l'entité de contrôle ;
où y est la valeur (y) basée sur le second paramètre public et vérifie l'équation : $y=(g^{v})^{r1}s^{c}$
où s est une clé secrète de l'entité à contrôler ;
où g est le premier paramètre public ;
où $g^{v}$ est le second paramètre public ;
où $r_{1}$ est la valeur aléatoire ;
où v est la clé secrète de l'entité de contrôle ;
où x est la valeur obtenue à l'étape /b/ et vérifie l'équation :

$$x=g^{Wr1}$$

où W est un paramètre public associé à l'entité à contrôler ;

Dans un mode de réalisation de la présente invention, on peut décider que l'entité à contrôler est contrôlée sur la base de l'équation suivante:

$$y^{-W}x^{v} = G_{1}^{d_{1}}...G_{m}^{d_{m}}$$

où $G_{1}$, $G_{2}$, ..., $G_{m}$ et W sont des clés publiques de l'entité à contrôler ou des valeurs dans une base de données accessible depuis l'entité de contrôle, où m est un entier positif ;
où x est la valeur combinée transmise dans le premier message et vérifie l'équation :

$$x = g^{Wr1}$$

où y est la valeur basée sur le second paramètre public et vérifie l'équation :

$$y = (g^{v})^{r1} Q_{1}^{d_{1}}...Q_{m}^{d_{m}}$$

où g est le premier paramètre public ;
où $g^{v}$ est le second paramètre public ;
où $r_{1}$ est la valeur aléatoire générée par l'entité à contrôler ;
où v est la clé secrète de l'entité de contrôle ;
où $Q_{1}$,...,$Q_{m}$ sont des clés secrètes de l'entité à contrôler et vérifient l'équation suivante :
$G_{i} Q_{i}^{W} = 1$, pour i compris entre 1 et m ;
où $d_{1}$, ..., $d_{m}$, sont des valeurs aléatoires générées par l'entité de contrôle.

Ainsi, il est possible de prévoir d'appliquer la présente invention dans le contexte du protocole GQ2 ou dans le contexte d'un protocole de type Fiat-Shamir à plusieurs secrets.

Un deuxième aspect de la présente invention propose un procédé de contrôle par une entité de contrôle d'au moins une entité à contrôler,
une clé secrète étant associée à l'entité de contrôle ;
les entité à contrôler et entité de contrôle partageant une pluralité de paramètres publics, un second paramètre public de ladite pluralité étant une combinaison d'un premier paramètre public de ladite pluralité avec la clé secrète de l'entité de contrôle;
ledit procédé comprenant les étapes suivantes au niveau de l'entité de contrôle :

/a/ recevoir depuis l'entité à contrôler un premier message comprenant au moins une valeur combinée obtenue à partir du premier paramètre public ;
/b/ générer une valeur aléatoire et transmettre cette valeur aléatoire à l'entité à contrôler ;
/c/ recevoir depuis l'entité à contrôler un second message comprenant au moins une valeur combinée obtenue à partir d'une valeur aléatoire générée au niveau de l'entité à contrôler, d'une clé secrète de l'entité à contrôler et de ladite valeur aléatoire générée à l'étape /b/ ;

dans lequel une des valeurs comprises dans le premier ou le second message est basée sur le second paramètre public.

Grâce à ces dispositions, on obtient les mêmes avantages que ceux listés ci-avant au regard du procédé de contrôle mis en œuvre selon un mode de réalisation de la présente invention au niveau de l'entité à contrôler.

Dans un mode de réalisation de la présente invention, des première et seconde valeurs aléatoires sont générées avant l'étape /a/ au niveau de l'entité à contrôler ; et
la valeur (z) basée sur le second paramètre public ($g^{v}$)

est en outre basée sur le seconde valeur aléatoire et est reçue dans le premier message.

On peut décider que l'entité à contrôler est contrôlée sur la base de l'équation suivante:

$$J = ((g^v)^y \, x^{-v} \, z^{-1})^{1/vc}$$

où J est la clé publique de l'entité à contrôler ou une valeur dans une base de données accessible depuis l'entité de contrôle ;
où g est le premier paramètre public ;
$g^v$ est le second paramètre public ;
x est la valeur combinée reçue dans le premier message ;
y est la valeur combinée reçue dans le second message ;
z est la valeur basée sur le second paramètre public;
c est la valeur transmise par l'entité de contrôle ; et
v est la clé secrète de l'entité de contrôle.

Ainsi, on obtient une application de la présente invention au protocole de type Schnorr.

On peut également prévoir de borner les valeurs aléatoires, la clé secrète de l'entité à contrôler, ainsi que la valeur reçue depuis l'entité de contrôle entre 0 et des valeurs définies respectives. On peut prévoir que les première et seconde valeurs aléatoires sont comprises entre 0 et A-1 ; la valeur reçue depuis l'entité de contrôle est comprise entre 0 et B-1 ; et la clé secrète de l'entité à contrôler est comprise entre 0 et S-1 ; où A, B et S sont paramètres publics. Dans ces conditions l'entité à contrôler peut être contrôlée en outre sur la base de l'inéquation suivante :

$$0 \le y \le 2(A-1) + (B-1)(S-1)$$

On peut décider dans un autre contexte que l'entité à contrôler est contrôlée sur la base de l'équation suivante:

$$J^{vc} = \frac{(g_1^v)^{y1}(g_2^v)^{y2}}{x^v z}$$

où J est la clé publique de l'entité à contrôler ou une valeur dans une base de données accessible depuis l'entité de contrôle ;
où $g_1$ et $g_2$ sont deux premiers paramètres publics ;
où $g_1^v$ et $g_2^v$ sont deux seconds paramètres publics ;
où v est une clé secrète de l'entité de contrôle ;
où x et z sont des valeurs transmises dans le premier message et vérifient respectivement les équations suivantes :

$$x = g_1^{r1} \cdot g_2^{r2}$$

$$z = g_1^{vr'1} \cdot g_2^{vr'2}$$

où $y_1$ et $y_2$ sont des valeurs transmises dans le second message et vérifient les équations respectives :

$$y_1 = r_1 + s_1 \, c + r'_1$$

$$y_2 = r_2 + s_2 \, c + r'_2$$

où $s_1$ et $s_2$ sont des clés secrètes de l'entité à contrôler ;
où $r_1$, $r_2$, $r'_1$ et $r'_2$ sont des valeurs aléatoires générées au niveau de l'entité à contrôler avant l'étape /a/.

On peut alors obtenir un procédé d'identification ou d'authentification adapté à un protocole de type Okamoto.

Alternativement, la valeur (y) basée sur le second paramètre public ($g^v$) peut alors en outre être basée sur la valeur aléatoire et est transmise dans le second message.

On peut ainsi décider que l'entité à contrôler est contrôlée sur la base de l'équation suivante:

$$y^2 \, x^{-v} = J^c$$

où J est la clé publique de l'entité à contrôler ou une valeur dans une base de données accessible depuis l'entité de contrôle ;
où y est la valeur (y) basée sur le second paramètre public et vérifie l'équation : $y = (g^v)^{r1} s^c$
où $g^v$ est le second paramètre public, r1 est la valeur aléatoire, s la clé secrète de l'entité à contrôler et c la valeur transmise par l'entité de contrôle ;
où x est la valeur obtenue avant l'étape /a/ au niveau de l'entité à contrôler et vérifie l'équation :

$$x = g^{2r1}$$

où v est la clé secrète de l'entité de contrôle.

On obtient alors aisément ici un procédé selon un mode de réalisation qui est adapté au protocole de type Fiat-Shamir.

On peut décider dans un autre contexte que l'entité à contrôler est contrôlée sur la base de l'équation suivante:

$$y^{-W}x^v = J^c$$

où J est la clé publique de l'entité à contrôler ou une valeur dans une base de données accessible depuis l'entité de contrôle ;

où y est la valeur (y) basée sur le second paramètre public et vérifie l'équation :

$$y=(g^v)^{r1}\,s^c$$

où s est une clé secrète de l'entité à contrôler ;
où g est le premier paramètre public ;
où $g^v$ est le second paramètre public ;
où r1 est la valeur aléatoire ;
où v est la clé secrète de l'entité de contrôle ;
où x est la valeur avant l'étape /a/ au niveau de l'entité à contrôler et vérifie l'équation :

$$x=g^{Wr1}$$

où W est un paramètre public associé à l'entité à contrôler.

On peut alors obtenir un procédé selon un mode de réalisation de la présente invention qui est adapté au protocole de type GQ.

Dans un mode de réalisation de la présente invention, on peut décider que l'entité à contrôler est contrôlée sur la base de l'équation suivante:

$$y^{-W}x^v = G_1^{d_1}...G_m^{d_m}$$

où $G_1$, $G_2$, ..., $G_m$ et W sont des clés publiques de l'entité à contrôler ou des valeurs dans une base de données accessible depuis l'entité de contrôle, où m est un entier positif ;

où x est la valeur combinée transmise dans le premier message et vérifie l'équation :

$$x = g^{Wr1}$$

où y est la valeur basée sur le second paramètre public et vérifie l'équation :

$$y = (g^v)^{r1} Q_1^{d_1}...Q_m^{d_m}$$

où g est le premier paramètre public ;
où $g^v$ est le second paramètre public ;
où $r_1$ est la valeur aléatoire générée par l'entité à contrôler ;
où v est la clé secrète de l'entité de contrôle ;

où $Q_1$,...,$Q_m$ sont des clés secrètes de l'entité à contrôler et vérifient l'équation suivante :
$G_i\,Q_i^W = 1$, pour i compris entre 1 et m ;
où $d_1$, ..., $d_m$, sont des valeurs aléatoires générées par l'entité de contrôle.

Un troisième aspect de la présente invention propose une entité à contrôler adaptée pour échanger des informations avec une entité de contrôle, et adaptée pour mettre en oeuvre un procédé de contrôle selon le premier aspect de la présente invention.

Un quatrième aspect de la présente invention propose une entité de contrôle adaptée pour échanger des informations avec une entité à contrôler, et adaptée pour mettre en œuvre un procédé de contrôle selon le deuxième aspect de la présente invention.

Un cinquième aspect de la présente invention propose un système de contrôle comprenant une entité de contrôle selon le quatrième aspect de la présente invention et au moins une entité à contrôler selon le troisième aspect de la présente invention.

D'autres aspects, buts et avantages de l'invention apparaîtront à la lecture de la description d'un de ses modes de réalisation.

L'invention sera également mieux comprise à l'aide des dessins, sur lesquels :

- la figure 1 illustre un procédé de contrôle selon un mode de réalisation de l'art antérieur ;
- la figure 2 illustre un procédé de contrôle selon un mode de réalisation de la présente invention ; et
- la figure 3 illustre un procédé de contrôle selon un autre mode de réalisation de la présente invention.

La présente invention trouve aisément à être appliquée dans différents protocoles comme notamment le protocole Schnorr, le protocole Okamoto, le protocole GPS, le protocole Fiat-Shamir, le protocole GQ, le protocole GQ2 défini dans 'The new Guillou-Quisquater scheme'. RSA 2000 conférence, ainsi que le protocole Ong-Schnorr tel que défini dans le document 'Fast signature génération with a Fiat Shamir like scheme' de H. Ong et C. Schnorr, Eurocrypt 1990.

La figure 2 illustre un procédé de contrôle dans un mode de réalisation de la présente invention. Ici, un système de contrôle contient une entité de contrôle 11 et une entité à contrôler 12.

Aucune limitation n'est attachée à l'entité à contrôler, ni au nombre d'entités à contrôler que peut gérer l'entité de contrôle 11.

La présente invention est aisément applicable de manière avantageuse à une entité à contrôler de type passeport électronique ou encore une entité à contrôler de type étiquette RFID.

Les paramètres publics utilisés dans un tel système de contrôle sont les suivants :

- g qui représente l'ensemble des valeurs dans lequel les calculs sont effectués ; et

- $g^v$, où v est une clé secrète associée à l'entité de contrôle 11.

L'entité de contrôle 11 dispose donc d'un identifiant secret v sur la base duquel il est possible de garantir une confidentialité de l'identité de l'entité à contrôler même en cas d'écoute des échanges.

L'entité à contrôler 12 dispose, elle, également de son identifiant secret s. Elle utilise en outre une clé publique notée I et qui vérifie l'équation :

$$I = g^s$$

Il est ici prévu que l'entité à contrôler 12 génère deux nombres aléatoires r1 et r2.

Puis, elle transmet à l'entité de contrôle 11 une première et une deuxième valeurs combinées qui vérifient respectivement les équations suivantes :

$$x = g^{r1},$$

et

$$z = (g^v)^{r2}$$

Sur réception de ces valeurs, l'entité de contrôle 11 génère un nombre aléatoire c (ou 'challenge' en anglais) et le transmet à l'entité à contrôler 12.

L'entité à contrôler 12, sur réception de cette valeur c, est alors en mesure de calculer une troisième valeur combinée :

$$y = r1 + sc + r2$$

Cette valeur y est ensuite envoyée à l'entité de contrôle 11.

Sur réception de cette valeur y, l'entité de contrôle est en mesure de calculer une valeur J selon l'équation suivante :

$$J = ((g^v)^y \, x^{-v} \, z^{-1})^{1/vc}$$

Ainsi, l'entité de contrôle peut avantageusement à ce stade déterminer si J correspond à une valeur de clé publique I qui est stockée par exemple dans une base de données associée à cette entité de contrôle. Dans ce cas, l'entité de contrôle peut décider que l'entité à contrôler 12 a été identifiée.

Dans le cas où l'entité de contrôle 11 connaît la valeur de I, elle peut alors vérifier que I vérifie l'équation :

$$I = ((g^v)^y \, x^{-v} \, z^{-1})^{1/vc}$$

et dans ce cas, décider que l'entité à contrôler a été authentifiée.

On peut prévoir que la valeur de I est stockée dans une base de données, accessible depuis l'entité de contrôle, et à laquelle on peut laisser libre accès, car la connaissance des identifiants I ne permet pas de reconnaître l'identité d'une entité à contrôler, quand bien même des échanges de cette entité à contrôler avec une entité de contrôle auraient été écoutés plusieurs fois.

Un tel procédé de contrôle garantit un niveau élevé de confidentialité qui repose essentiellement sur le secret attaché à la clé secrète de l'entité de contrôle. En effet, sans cette valeur v il est impossible d'obtenir de l'information sur l'identification de l'entité à contrôler.

Or, il convient de noter que, avantageusement, au regard des informations échangées, il est très complexe de retrouver la clé secrète v.

Les sections précédentes illustrent comment un principe de la présente invention peut avantageusement être appliqué dans le contexte de protocole de type Schnorr.

Les sections suivantes détaillent une application de la présente invention dans le contexte d'un protocole de type GPS.

Ici, on prévoit de borner les valeurs suivantes :

- r1 et r2 entre 0 et A-1 ;
- c entre 0 et B-1 ; et
- s entre 0 et S-1 ;

où A, B et S sont des paramètres aux valeurs définies.

Dans ce contexte, on contrôle l'identité de l'entité à contrôler sur la base de l'équation suivante :

$$I = ((g^v)^y \, x^{-v} \, z^{-1})^{1/vc}$$

ainsi que de l'équation suivante :

$$0 \le y \le 2(A-1) + (B-1)(S-1)$$

Les sections suivantes détaillent une application de la présente invention dans le contexte d'un protocole de type Okamoto.

On prévoit ici d'associer une première clé secrète s1 et une seconde clé secrète s2 à l'entité à contrôler.

Les paramètres publics partagés par l'entité de contrôle et l'entité à contrôler sont $g_1$, $g_2$, $g_1^v$ et $g_2^v$, où v est la clé secrète de l'entité de contrôle.

Une clé publique associée à l'entité à contrôler I vérifie l'équation suivante :

$$I = g_1^{\ s1}\, g_2^{\ s2}$$

Dans ce contexte, à l'étape /a/, les quatre valeurs aléatoires r1,r2,r'1 et r'2 sont générées.

Puis l'entité à contrôler 12 émet à destination de l'entité de contrôle 11 un premier message qui comprend les deux valeurs x et z définies respectivement par les équations suivantes :

$$x = g_1^{\ r1} \cdot g_2^{\ r2}$$

$$z = (g_1^{\ v})^{r'1} \cdot (g_2^{\ v})^{r'2}$$

Sur réception de ce premier message, l'entité de contrôle génère une valeur aléatoire c et la transmet à l'entité à contrôler.

Puis, cette valeur aléatoire reçue depuis l'entité de contrôle est prise en compte au niveau de l'entité à contrôler afin de déterminer deux valeurs à transmettre dans un second message émis à destination de l'entité de contrôle. Ces deux valeurs y1 et y2 vérifient les équations suivantes :

$$y1 = r1 + s1.c + r'1$$

$$y2 = r2 + s2.c + r'2$$

Enfin, sur la base des valeurs contenues dans ce second message, l'entité de contrôle est en mesure de contrôler l'entité de contrôle, c'est à dire en mesure de l'identifier ou de l'authentifier selon l'équation suivante:

$$J^{vc} = \frac{(g_1^{\ v})^{y1}(g_2^{\ v})^{y2}}{x^{v} z}$$

Plus précisément, lorsque l'entité de contrôle connaît la valeur de la clé publique I de l'entité à contrôler, elle contrôle si l'équation précédente est vérifiée, et dans ce cas décide que l'entité à contrôler est authentifiée.

Dans le cas où l'entité de contrôle dispose d'une base de données de clés publiques de différentes entités à contrôler, elle vérifie si une valeur J de la base de données vérifie l'équation précédente, et si tel est le cas elle décide que l'entité à contrôler est identifiée.

Les sections suivantes décrivent plusieurs applications de la présente invention au cas où la valeur combinée qui est basée sur le second paramètre public, c'est-à-dire le paramètre public qui est issu d'une combinaison avec la clé secrète de l'entité de contrôle, est envoyée à l'entité de contrôle dans le second message.

La figure 3 illustre un tel mode de réalisation dans lequel une première valeur combinée x est initialement envoyée depuis l'entité à contrôler 12 vers l'entité de contrôle 11 dans un premier message, et dans lequel une valeur combinée y obtenue à partir du paramètre public partagé issu de la clé secrète de l'entité de contrôle est envoyée plus tard dans un second message.

Les sections suivantes détaillent ce type d'application dans le contexte d'un protocole de type Fiat-Shamir.

Une clé secrète v est ici encore associée à l'entité de contrôle 11 et une clé publique I et une clé secrète s sont associées à l'entité à contrôler 12.

La clé publique I et la clé secrète s de l'entité à contrôler sont reliées par l'équation suivante :

$$I = s^2$$

Une valeur aléatoire r1 est générée au niveau de l'entité à contrôler. Puis, on obtient une valeur combinée x à transmettre dans le premier message pour l'entité de contrôle selon l'équation suivante :

$$x = g^{2r1}$$

Sur réception de ce premier message, l'entité de contrôle génère une valeur aléatoire c et la transmet à l'entité à contrôler, cette valeur étant comprise dans l'ensemble de valeurs 0 et 1.

Ensuite, l'entité à contrôler est capable de déterminer une valeur combinée y à transmettre via un second message à l'entité de contrôle selon l'équation suivante :

$$y = (g^{v})^{r1} s^{c}$$

Ici, l'entité de contrôle peut décider si l'entité à contrôler est contrôlée ou non. En effet, si l'entité de contrôle connaît la clé publique de l'entité à contrôler elle est en mesure de décider que cette dernière est authentifiée si l'équation suivante est vérifiée :

$$I^{c} = y^{2} x^{-v}$$

Si elle dispose seulement d'une base de données de clés publiques elle peut décider que l'entité à contrôler est identifiée s'il existe une valeur J dans la base de données vérifiant l'équation :

$$J^{c} = y^{2} x^{-v}$$

De manière générale, les échanges décrits dans différents contextes d'application peuvent avantageusement être réitérés afin de pouvoir augmenter la fiabilité d'une décision d'identification ou d'authentification. Il convient de noter qu'il est préférable d'opérer ainsi par réitération dans le contexte d'application à un protocole de type Fiat-Shamir.

Les sections suivantes détaillent une application de la présente invention dans le contexte d'un protocole de type GQ.

Une clé secrète v est associée à l'entité de contrôle 11. Deux clés publiques I et W sont associées à l'entité à contrôler 12, ainsi qu'une clé secrète s, l'équation suivante étant vérifiée :

$$s^W I = 1$$

Les paramètres publics g et $g^v$ sont partagés par l'entité de contrôle et l'entité à contrôler, v étant la clé secrète de l'entité de contrôle.

Une valeur aléatoire r1 est générée au niveau de l'entité à contrôler. Puis, un premier message est transmis à l'entité de contrôle, ce premier message comprenant une valeur x vérifiant l'équation suivante :

$$x = g^{Wr1}$$

Sur réception de ce premier message, l'entité de contrôle génère une valeur aléatoire c et la transmet à l'entité à contrôler, cette valeur étant comprise entre 0 et W-1.

Cette dernière est alors en mesure de déterminer une valeur y obtenue sur la base du paramètre public $g^v$ selon l'équation suivante :

$$y = (g^v)^{r1} s^c$$

Ensuite cette valeur y est transmise dans un second message à destination de l'entité de contrôle.

Cette dernière peut alors contrôler l'entité à contrôler.

Si elle connaît les clés publiques I et W de l'entité à contrôler, et que l'équation suivante est vérifiée :

$$I^c = y^{-W} x^v$$

alors l'entité à contrôler est authentifiée.

Si l'entité de contrôle dispose d'une base de données comprenant une liste de clés publiques alors elle peut décider que l'entité à contrôler est identifiée si une valeur J de la base de données vérifie l'équation suivante :

$$J^c = y^{-W} x^v$$

Les sections suivantes détaillent une application de la présente invention dans le contexte d'un protocole de type GQ2.

Les paramètres publics g et $g^v$ sont partagés par l'entité de contrôle et l'entité à contrôler, v étant la clé secrète de l'entité de contrôle.

Une pluralité de clés publiques sont associées à l'entité à contrôler $G_1, ... , G_m$ et W, où m est un entier positif.

Une pluralité de clés secrètes sont également associées à l'entité à contrôler $Q_1, ..., Q_m$, ces clés secrètes vérifiant l'équation suivante :
$G_i Q_i^W = 1$, pour i compris entre 1 et m.

L'entité à contrôler génère une valeur aléatoire $r_1$ et transmet un premier message à l'entité de contrôle, ce premier message comprenant la valeur x définie comme suit :

$$x = g^{Wr1}$$

Sur réception de ce premier message, l'entité de contrôle génère une pluralité de valeurs aléatoires $d_1, ..., d_m$, chacune étant comprise entre 0 et W-1.

Ensuite, l'entité à contrôler transmet dans un second message la valeur y telle que définie ci-après :

$$y = (g^v)^{r1} Q_1^{d_1} ... Q_m^{d_m}$$

Sur réception de ce second message, l'entité de contrôle est alors en mesure de contrôler l'entité à contrôler. Si elle connaît toutes les clés publiques de l'entité à contrôler, elle peut l'authentifier si l'équation suivante est vérifiée :

$$y^{-W} x^v = G_1^{d_1} ... G_m^{d_m}$$

Dans tous les cas décrits ci-avant, il convient de noter qu'il peut être avantageux de prévoir d'échanger le paramètre public $g^v$ au préalable avant tout autre échange de message selon le procédé d'un mode de réalisation de la présente invention. Dans ce cas, on peut prévoir que l'entité à contrôler vérifie la validité de ce paramètre public par une méthode de certification ou de signature. Un tel mode de réalisation permet alors de modifier de manière aisée ce paramètre et d'augmenter ainsi le niveau de protection et l'interopérabilité d'un tel protocole dans certaines conditions.

**Revendications**

1. Procédé de contrôle d'une entité à contrôler (12) par une entité de contrôle (11) ; une clé secrète v étant associée à l'entité de contrôle ; lesdites entité à contrôler et entité de contrôle partageant une pluralité de paramètres publics (g, $g^v$), un second paramètre public $g^v$ de ladite pluralité étant une combinaison d'un premier paramètre public g de ladite pluralité avec la clé secrète v de l'entité de contrôle (11); ledit procédé comprenant les étapes suivantes au niveau de l'entité à contrôler :

   /a/ générer des première et seconde valeurs aléatoires (r1, r2) ;
   /b/ transmettre un premier message à l'entité de contrôle, ledit premier message comprenant au moins une valeur combinée x obtenue en combinant le premier paramètre public g avec la première valeur aléatoire, ledit premier message comprenant en outre une valeur z basée sur le second paramètre public $g^v$ et la seconde valeur aléatoire (r2) ; et
   /c/ transmettre un second message à l'entité de contrôle, ledit second message comprenant au moins une valeur combinée y obtenue en combinant la première valeur aléatoire (r1), une clé secrète de l'entité à contrôler (s) et une valeur c reçue depuis l'entité de contrôle ;

   **caractérisé en ce que**:

   la valeur combinée x est obtenue en calculant le premier paramètre public à la puissance de la première valeur aléatoire ; la valeur z est obtenue en calculant le second paramètre public à la puissance de la seconde valeur aléatoire ; la valeur combinée y est obtenue en sommant les valeurs suivantes : la première valeur aléatoire, la seconde valeur aléatoire et le produit de la clé secrète de l'entité à contrôler (s) avec la valeur c ;
   le procédé comprenant en outre une étape /d/ au cours de laquelle l'entité à contrôler est contrôlée par l'entité de contrôle sur la base de l'équation suivante:

   $$J = \left((g^v)^y \, x^{-v} \, z^{-1}\right)^{1/vc}$$

   où J est une clé publique de l'entité à contrôler ou une valeur dans une base de données accessible depuis l'entité de contrôle.

2. Procédé de contrôle selon la revendication 1, dans lequel les première et seconde valeurs aléatoires sont comprises entre 0 et A-1 ; la valeur c reçue depuis l'entité de contrôle est comprise entre 0 et B-1 ; et la clé secrète de l'entité à contrôler est comprise entre 0 et S-1 ; où A, B et S sont des paramètres publics ; et dans lequel l'entité à contrôler est contrôlée en outre sur la base de l'inéquation suivante :

   $$0 \le y \le 2(A-1) + (B-1)(S-1)$$

3. Procédé de contrôle d'une entité à contrôler (12) par une entité de contrôle (11) ; une clé secrète v étant associée à l'entité de contrôle ; lesdites entité à contrôler et entité de contrôle partageant une pluralité de paramètres publics ($g_1$, $g_2$, $g_1^v$, $g_2^v$), un second paramètre public $g_1^v$ de ladite pluralité étant une combinaison d'un premier paramètre public $g_1$ de ladite pluralité avec la clé secrète v de l'entité de contrôle (11), un second paramètre public $g_2^v$ de ladite pluralité étant une combinaison d'un premier paramètre public $g_2$ de ladite pluralité avec la clé secrète v de l'entité de contrôle (11) ; ledit procédé comprenant les étapes suivantes au niveau de l'entité à contrôler :

   /a/ générer des valeurs aléatoires r1, r2, r'1 et r'2 ;
   /b/ transmettre un premier message à l'entité de contrôle, ledit premier message comprenant au moins une valeur combinée x et une valeur z ; et
   /c/ transmettre un second message à l'entité de contrôle, ledit second message comprenant au moins une valeur combinée $y_1$ et une valeur combinée $y_2$ ;

   **caractérisé en ce que**:
   la valeur combinée x et la valeur z vérifient respectivement les équations suivantes :

   $$x = g_1^{r1}.g_2^{r2}$$

   $$z = g_1^{vr'1}.g_2^{vr'2}$$

   dans lequel les valeurs combinées $y_1$ et $y_2$ vérifient les équations respectives :

   $$y_1 = r1 + s_1 c + r'1$$

   $$y_2 = r2 + s_2 c + r'2$$

où $s_1$ et $s_2$ sont des clés secrètes de l'entité à contrôler ;

où c est une valeur reçue depuis l'entité de contrôle ;

le procédé comprenant en outre une étape /d/ au cours de laquelle l'entité à contrôler est contrôlée par l'entité de contrôle sur la base de l'équation suivante :

$$J^{vc} = \frac{(g_1^v)^{y1}(g_2^v)^{y2}}{x^v z}$$

où J est une clé publique de l'entité à contrôler ou une valeur dans une base de données accessible depuis l'entité de contrôle.

4. Procédé de contrôle d'une entité à contrôler (12) par une entité de contrôle (11) ; une clé secrète v étant associée à l'entité de contrôle ; lesdites entité à contrôler et entité de contrôle partageant une pluralité de paramètres publics (g, $g^v$), un second paramètre public $g^v$ de ladite pluralité étant une combinaison d'un premier paramètre public g de ladite pluralité avec la clé secrète v de l'entité de contrôle (11); ledit procédé comprenant les étapes suivantes au niveau de l'entité à contrôler :

/a/ générer au moins une valeur aléatoire r1 ;
/b/ transmettre un premier message à l'entité de contrôle, ledit premier message comprenant au moins une valeur combinée x obtenue en combinant le premier paramètre public g avec la valeur aléatoire r1 ; et
/c/ transmettre un second message à l'entité de contrôle, ledit second message comprenant une valeur combinée y obtenue en combinant la valeur aléatoire r1, une clé secrète s de l'entité à contrôler, une valeur c reçue depuis l'entité de contrôle et le second paramètre public $g^v$ ;

**caractérisé en ce que**:
la valeur combinée x et la valeur combinée y vérifient respectivement les équations suivantes :

$$x = g^{2r1}$$

$$y = (g^v)^{r1}s^c$$

le procédé comprenant en outre une étape /d/ au cours de laquelle l'entité à contrôler est contrôlée par l'entité de contrôle sur la base de l'équation suivante :

$$y^2 x^{-v} = J^c$$

où J est une clé publique de l'entité à contrôler ou une valeur dans une base de données accessible depuis l'entité de contrôle.

5. Procédé de contrôle d'une entité à contrôler (12) par une entité de contrôle (11) ; une clé secrète v étant associée à l'entité de contrôle ; lesdites entité à contrôler et entité de contrôle partageant une pluralité de paramètres publics (g, $g^v$), un second paramètre public $g^v$ de ladite pluralité étant une combinaison d'un premier paramètre public g de ladite pluralité avec la clé secrète v de l'entité de contrôle (11); ledit procédé comprenant les étapes suivantes au niveau de l'entité à contrôler :

/a/ générer au moins une valeur aléatoire r1 ;
/b/ transmettre un premier message à l'entité de contrôle, ledit premier message comprenant au moins une valeur combinée x obtenue en combinant le premier paramètre public g avec la valeur aléatoire r1 ; et
/c/ transmettre un second message à l'entité de contrôle, ledit second message comprenant une valeur combinée y obtenue en combinant la valeur aléatoire r1, une clé secrète s de l'entité à contrôler, une valeur c reçue depuis l'entité de contrôle et le second paramètre public $g^v$ ;

**caractérisé en ce que**:
la valeur combinée x et la valeur combinée y vérifient respectivement les équations suivantes :

$$x = g^{Wr1}$$

$$y = (g^v)^{r1}s^c$$

où W est un paramètre public associé à l'entité à contrôler ;

le procédé comprenant en outre une étape /d/ au cours de laquelle l'entité à contrôler est contrôlée par l'entité de contrôle sur la base de l'équation suivante :

$$y^{-W}x^v = J^c$$

où J est une clé publique de l'entité à contrôler ou une valeur dans une base de données accessible depuis l'entité de contrôle.

6. Procédé de contrôle d'une entité à contrôler (12) par une entité de contrôle (11) ;
une clé secrète v étant associée à l'entité de contrôle ;
lesdites entité à contrôler et entité de contrôle partageant une pluralité de paramètres publics (g, g$^v$), un second paramètre public g$^v$ de ladite pluralité étant une combinaison d'un premier paramètre public g de ladite pluralité avec la clé secrète v de l'entité de contrôle (11);
ledit procédé comprenant les étapes suivantes au niveau de l'entité à contrôler :

/a/ générer au moins une valeur aléatoire r1 ;
/b/ transmettre un premier message à l'entité de contrôle, ledit premier message comprenant au moins une valeur combinée x obtenue en combinant le premier paramètre public g avec la valeur aléatoire r1 ; et
/c/ transmettre un second message à l'entité de contrôle, ledit second message comprenant une valeur combinée y obtenue en combinant la valeur aléatoire r1, une clé secrète s de l'entité à contrôler, des valeurs aléatoires $d_1$, ..., $d_m$ générées par et reçues depuis l'entité de contrôle, et le second paramètre public g$^v$ ;

le procédé comprenant en outre une étape /d/ au cours de laquelle l'entité à contrôler est contrôlée par l'entité de contrôle sur la base de l'équation suivante:

$$y^{-W} x^v = G_1^{d_1} ... G_m^{d_m}$$

où $G_1$, $G_2$, ..., $G_m$ et W sont des clés publiques de l'entité à contrôler ou des valeurs dans une base de données accessible depuis l'entité de contrôle, où m est un entier positif ;
**caractérisé en ce que**:
la valeur combinée x et la valeur combinée y vérifient respectivement les équations suivantes :

$$x = g^{Wr1}$$

$$y = (g^v)^{r1} Q_1^{d_1} ... Q_m^{d_m}$$

où $Q_1$,...,$Q_m$ sont des clés secrètes de l'entité à contrôler et vérifient l'équation suivante :
$G_i Q_i^W = 1$, pour i compris entre 1 et m.

7. Procédé de contrôle par une entité de contrôle (11) d'au moins une entité à contrôler (12),

une clé secrète v étant associée à l'entité de contrôle ;
lesdites entité à contrôler et entité de contrôle partageant une pluralité de paramètres publics (g, g$^v$), un second paramètre public g$^v$ de ladite pluralité étant une combinaison d'un premier paramètre public g de ladite pluralité avec la clé secrète v de l'entité de contrôle (11);
ledit procédé comprenant les étapes suivantes au niveau de l'entité de contrôle :

/a/ recevoir depuis l'entité à contrôler un premier message comprenant au moins une valeur combinée x obtenue en combinant le premier paramètre public g et une première valeur aléatoire (r1) ; ledit premier message comprenant en outre une valeur z basée sur le second paramètre public g$^v$ et une seconde valeur aléatoire (r2) ; les première et seconde valeurs aléatoires (r1,r2) étant générées au niveau de l'entité à contrôler avant l'étape /a/ ;
/b/ générer une valeur aléatoire c et transmettre cette valeur aléatoire c à l'entité à contrôler (12) ;
/c/ recevoir depuis l'entité à contrôler (12) un second message comprenant au moins une valeur combinée y obtenue en combinant la première valeur aléatoire (r1) générée au niveau de l'entité à contrôler, une clé secrète de l'entité à contrôler (s) et ladite valeur aléatoire c générée à l'étape /b/ ;
**caractérisé en ce que**:
la valeur combinée x est obtenue en calculant le premier paramètre public à la puissance de la première valeur aléatoire ; la valeur z est obtenue en calculant le second paramètre public à la puissance de la seconde valeur aléatoire ; la valeur combinée y est obtenue en sommant les valeurs suivantes : la première valeur aléatoire, la seconde valeur aléatoire et le produit de la clé secrète de l'entité à contrôler (s) avec la valeur c ;
/d/ contrôler l'entité à contrôler (12) sur la base de l'équation suivante:

$$J = ((g^v)^y \, x^{-v} \, z^{-1})^{1/vc}$$

où J est une clé publique de l'entité à contrôler ou une valeur dans une base de données accessible depuis l'entité de contrôle.

8. Procédé de contrôle selon la revendication 7, dans lequel les première et seconde valeurs aléatoires sont comprises entre 0 et A-1 ; la valeur c reçue depuis l'entité de contrôle est comprise entre 0 et B-1 ; et la clé secrète de l'entité à contrôler est comprise entre 0 et S-1 ; où A, B et S sont des paramètres publics ; et
dans lequel l'entité à contrôler est contrôlée en outre sur la base de l'inéquation suivante :

$$0 \leq y \leq 2(A-1) + (B-1)(S-1)$$

**9.** Procédé de contrôle par une entité de contrôle (11) d'au moins une entité à contrôler (12),
une clé secrète v étant associée à l'entité de contrôle ;
lesdites entité à contrôler et entité de contrôle partageant une pluralité de paramètres publics ($g_1$, $g_2$, $g_1^v$, $g_2^v$), un second paramètre public $g_1^v$ de ladite pluralité étant une combinaison d'un premier paramètre public $g_1$ de ladite pluralité avec la clé secrète v de l'entité de contrôle (11), un second paramètre public $g_2^v$ de ladite pluralité étant une combinaison d'un premier paramètre public $g_2$ de ladite pluralité avec la clé secrète v de l'entité de contrôle (11);
ledit procédé comprenant les étapes suivantes au niveau de l'entité de contrôle :

/a/ recevoir depuis l'entité à contrôler un premier message comprenant au moins une valeur combinée x et une valeur z ; et
/b/ générer une valeur aléatoire c et transmettre cette valeur aléatoire c à l'entité à contrôler (12) ;
/c/ recevoir depuis l'entité à contrôler (12) un second message comprenant au moins une valeur combinée $y_1$ et une valeur combinée $y_2$ ;
**caractérisé en ce que**:
la valeur combinée x et la valeur z vérifient respectivement les équations suivantes :

$$x = g_1^{r1}.g_2^{r2}$$

$$z = g_1^{vr'1}.g_2^{vr'2}$$

dans lequel les valeurs combinées $y_1$ et $y_2$ vérifient les équations respectives :

$$y_1 = r1 + s_1 c + r'1$$

$$y_2 = r2 + s_2 c + r'2$$

où $s_1$ et $s_2$ sont des clés secrètes de l'entité à contrôler ;
où r1, r2, r'1 et r'2 sont des valeurs aléatoires générées au niveau de l'entité à contrôler avant l'étape /a/ ;

/d/ contrôler l'entité à contrôler (12) sur la base de l'équation suivante:

$$J^{vc} \equiv \frac{(g_1^v)^{y_1}(g_2^v)^{y_2}}{x^v z}$$

où J est une clé publique de l'entité à contrôler ou une valeur dans une base de données accessible depuis l'entité de contrôle.

**10.** Procédé de contrôle par une entité de contrôle (11) d'au moins une entité à contrôler (12),
une clé secrète v étant associée à l'entité de contrôle ;
lesdites entité à contrôler et entité de contrôle partageant une pluralité de paramètres publics (g, $g^v$), un second paramètre public $g^v$ de ladite pluralité étant une combinaison d'un premier paramètre public g de ladite pluralité avec la clé secrète v de l'entité de contrôle (11);
ledit procédé comprenant les étapes suivantes au niveau de l'entité de contrôle :

/a/ recevoir depuis l'entité à contrôler un premier message comprenant au moins une valeur combinée x obtenue en combinant le premier paramètre public g et une valeur aléatoire r1 ; la valeur aléatoire r1 étant générée au niveau de l'entité à contrôler avant l'étape /a/ ;
/b/ générer une valeur aléatoire c et transmettre cette valeur aléatoire c à l'entité à contrôler (12) ;
/c/ recevoir depuis l'entité à contrôler (12) un second message comprenant au moins une valeur combinée y obtenue en combinant la valeur aléatoire r1 générée au niveau de l'entité à contrôler, une clé secrète s de l'entité à contrôler, la valeur aléatoire c et le second paramètre public $g^v$ ;
**caractérisé en ce que**:
la valeur combinée x et la valeur combinée y vérifient respectivement les équations suivantes :

$$x = g^{2r1}$$

$$y = (g^v)^{r1} s^c$$

/d/ contrôler l'entité à contrôler (12) sur la base de l'équation suivante:

$$y^2 x^{-v} = J^c$$

où J est une clé publique de l'entité à contrôler ou une valeur dans une base de données accessible depuis l'entité de contrôle.

11. Procédé de contrôle par une entité de contrôle (11) d'au moins une entité à contrôler (12),

une clé secrète v étant associée à l'entité de contrôle ;

lesdites entité à contrôler et entité de contrôle partageant une pluralité de paramètres publics (g, g$^v$), un second paramètre public g$^v$ de ladite pluralité étant une combinaison d'un premier paramètre public g de ladite pluralité avec la clé secrète v de l'entité de contrôle (11);

ledit procédé comprenant les étapes suivantes au niveau de l'entité de contrôle :

/a/ recevoir depuis l'entité à contrôler un premier message comprenant au moins une valeur combinée x obtenue en combinant le premier paramètre public g et une valeur aléatoire r$_1$ ; dans lequel la valeur aléatoire r$_1$ est générée au niveau de l'entité à contrôler avant l'étape /a/ ;

/b/ générer une valeur aléatoire c et transmettre cette valeur aléatoire c à l'entité à contrôler (12) ;

/c/ recevoir depuis l'entité à contrôler (12) un second message comprenant au moins une valeur combinée y obtenue en combinant la valeur aléatoire r$_1$ générée au niveau de l'entité à contrôler, une clé secrète s de l'entité à contrôler, la valeur aléatoire c et le second paramètre public g$^v$ ;

**caractérisé en ce que**:

la valeur combinée x et la valeur combinée y vérifient respectivement les équations suivantes :

$$x = g^{Wr1}$$

$$y = (g^v)^{r1} s^c$$

où W est un paramètre public associé à l'entité à contrôler.

/d/ contrôler l'entité à contrôler (12) sur la base de l'équation suivante:

$$y^{-W} x^v = J^c$$

où J est une clé publique de l'entité à contrôler ou une valeur dans une base de données accessible depuis l'entité de contrôle.

12. Procédé de contrôle par une entité de contrôle (11) d'au moins une entité à contrôler (12),

une clé secrète v étant associée à l'entité de contrôle ;

lesdites entité à contrôler et entité de contrôle partageant une pluralité de paramètres publics (g, g$^v$), un second paramètre public g$^v$ de ladite pluralité étant une combinaison d'un premier paramètre public g de ladite pluralité avec la clé secrète v de l'entité de contrôle (11);

ledit procédé comprenant les étapes suivantes au niveau de l'entité de contrôle :

/a/ recevoir depuis l'entité à contrôler un premier message comprenant au moins une valeur combinée x obtenue en combinant le premier paramètre public g et une valeur aléatoire r1 ; la valeur aléatoire r1 étant générée au niveau de l'entité à contrôler avant l'étape /a/ ;

/b/ générer des valeurs aléatoires d$_1$, ..., d$_m$ et transmettre ces valeurs aléatoires d$_1$, ..., d$_m$ à l'entité à contrôler (12) ;

/c/ recevoir depuis l'entité à contrôler (12) un second message comprenant au moins une valeur combinée y obtenue en combinant la valeur aléatoire r1 générée au niveau de l'entité à contrôler, une clé secrète s de l'entité à contrôler, les valeurs aléatoires d$_1$, ..., d$_m$ et le second paramètre public g$^v$ ;

/d/ contrôler l'entité à contrôler (12) sur la base de l'équation suivante:

$$y^{-W} x^v = G_1^{d_1} ... G_m^{d_m}$$

où G$_1$, G$_2$, ..., G$_m$ et W sont des clés publiques de l'entité à contrôler ou des valeurs dans une base de données accessible depuis l'entité de contrôle, où m est un entier positif ;

**caractérisé en ce que**:

la valeur combinée x et la valeur combinée y vérifient respectivement les équations suivantes :

$$x = g^{Wr1}$$

$$y = (g^v)^{r1} Q_1^{d_1} ... Q_m^{d_m}$$

où Q$_1$,...,Q$_m$ sont des clés secrètes de l'entité à contrôler et vérifient l'équation suivante :
G$_i$ Q$_i^W$ = 1, pour i compris entre 1 et m.

13. Entité à contrôler (12) adaptée pour échanger des informations avec une entité de contrôle (11), et adaptée pour mettre en œuvre un procédé de contrôle selon l'une quelconque des revendications 1 à 6.

14. Entité de contrôle (11) adaptée pour échanger des informations avec une entité à contrôler (12), et adaptée pour mettre en œuvre un procédé de contrôle selon l'une quelconque des revendications 7 à 12.

15. Système de contrôle comprenant une entité de contrôle (11) selon la revendication 14 et au moins une entité à contrôler (12) selon la revendication 13.

**Patentansprüche**

1. Verfahren zur Steuerung einer zu steuernden Einheit (12) von einer Steuereinheit (11);
wobei der Steuereinheit ein geheimer Schlüssel v zugeordnet ist;
wobei die zu steuernde Einheit und die Steuereinheit eine Vielzahl von öffentlichen Parametern (g, $g^v$) teilen, wobei ein zweiter öffentlicher Parameter $g^v$ der Vielzahl eine Kombination aus einem ersten öffentlichen Parameter g der Vielzahl und dem geheimen Schlüssel v der Steuereinheit (11) ist;
wobei das Verfahren auf Ebene der zu steuernden Einheit die folgenden Schritte umfasst:

/a/ Generieren eines ersten und eines zweiten Zufallswerts (r1, r2);
/b/ Übertragen einer ersten Nachricht an die Steuereinheit, wobei die erste Nachricht mindestens einen kombinierten Wert x umfasst, der erhalten wird, indem der erste öffentliche Parameter g mit dem ersten Zufallswert kombiniert wird, wobei die erste Nachricht ferner einen Wert z umfasst, der auf dem zweiten öffentlichen Parameter $g^v$ und dem zweiten Zufallswert (r2) basiert; und
/c/ Übertragen einer zweiten Nachricht an die Steuereinheit, wobei die zweite Nachricht mindestens einen kombinierten Wert y umfasst, der erhalten wird, indem der erste Zufallswert (r1) mit einem geheimen Schlüssel der zu steuernden Einheit (s) und einem Wert c kombiniert wird, der von der Steuereinheit empfangen wird;

**dadurch gekennzeichnet, dass**:

der kombinierte Wert x erhalten wird, indem der erste öffentliche Parameter zur Potenz des ersten Zufallswerts berechnet wird; der Wert z erhalten wird, indem der zweite öffentliche Parameter zur Potenz des zweiten Zufallswerts berechnet wird; der kombinierte Wert y erhalten wird, indem die folgenden Werte summiert werden: der erste Zufallswert, der zweite Zufallswert und das Produkt von dem geheimen Schlüssel der zu steuernden Einheit (s) und dem Wert c;
wobei das Verfahren ferner einen Schritt /d/ umfasst, in dem die zu steuernde Einheit auf Basis der folgenden Gleichung von der Steuereinheit gesteuert wird:

$$J = ((g^v)^y\, x^{-v}\, z^{-1})^{1/vc}$$

wobei J ein öffentlicher Schlüssel der zu steuernden Einheit oder ein Wert in einer Datenbank ist, auf die von der Steuereinheit zugegriffen werden kann.

2. Steuerverfahren nach Anspruch 1, wobei der erste und zweite Zufallswert zwischen 0 und A-1 liegen; der Wert c, der von der Steuereinheit empfangen wird, zwischen 0 und B-1 liegt; und der geheime Schlüssel der zu steuernden Einheit zwischen 0 und S-1 liegt; wobei A, B und S öffentliche Parameter sind; und
wobei die zu steuernde Einheit ferner auf Basis der folgenden Ungleichung gesteuert wird:

$$0 \le y \le 2(A - 1) + (B - 1)\,(S - 1)$$

3. Verfahren zur Steuerung einer zu steuernden Einheit (12) von einer Steuereinheit (11);
wobei der Steuereinheit ein geheimer Schlüssel v zugeordnet ist;
wobei die zu steuernde Einheit und die Steuereinheit eine Vielzahl von öffentlichen Parametern ($g_1$, $g_2$, $g_1^v$, $g_2^v$) teilen, wobei ein zweiter öffentlicher Parameter $g_1^v$ der Vielzahl eine Kombination aus einem ersten öffentlichen Parameter $g_1$ der Vielzahl und dem geheimen Schlüssel v der Steuereinheit (11) ist, wobei ein zweiter öffentlicher Parameter $g_2^v$ der Vielzahl eine Kombination aus einem ersten öffentlichen Parameter $g_2$ der Vielzahl und dem geheimen Schlüssel v der Steuereinheit (11) ist;
wobei das Verfahren auf Ebene der zu steuernden Einheit die folgenden Schritte umfasst:

/a/ Generieren von Zufallswerten r1, r2, r'1 und r'2;
/b/ Übertragen einer ersten Nachricht an die Steuereinheit, wobei die erste Nachricht mindestens einen kombinierten Wert x und einen Wert z umfasst; und
/c/ Übertragen einer zweiten Nachricht an die Steuereinheit, wobei die zweite Nachricht mindestens einen kombinierten Wert $y_1$ und einen kombinierten Wert $y_2$ umfasst;
**dadurch gekennzeichnet, dass**:
der kombinierte Wert x und der Wert z jeweils die folgenden Gleichungen erfüllen:

$$x = g_1^{r1} \cdot g_2^{r2}$$

$$z = g_1^{vr'1} \cdot g_2^{vr'2}$$

wobei die kombinierten Werte $y_1$ und $y_2$ die jeweiligen Gleichungen erfüllen:

$$y_1 = r1 + s_1c + r'1$$

$$y_2 = r2 + s_2c + r'2$$

wobei $s_1$ und $s_2$ geheime Schlüssel der zu steuernden Einheit sind;
wobei c ein Wert ist, der von der Steuereinheit empfangen wird;

wobei das Verfahren ferner einen Schritt /d/ umfasst, in dem die zu steuernde Einheit auf Basis der folgenden Gleichung von der Steuereinheit gesteuert wird:

$$J^{vc} = \frac{(g_1^v)^{y1}(g_2^v)^{y2}}{x^v z}$$

wobei J ein öffentlicher Schlüssel der zu steuernden Einheit oder ein Wert in einer Datenbank ist, auf die von der Steuereinheit zugegriffen werden kann.

4. Verfahren zur Steuerung einer zu steuernden Einheit (12) von einer Steuereinheit (11);
wobei der Steuereinheit ein geheimer Schlüssel v zugeordnet ist;
wobei die zu steuernde Einheit und die Steuereinheit eine Vielzahl von öffentlichen Parametern (g, $g^v$) teilen, wobei ein zweiter öffentlicher Parameter $g^v$ der Vielzahl eine Kombination aus einem ersten öffentlichen Parameter g der Vielzahl und dem geheimen Schlüssel v der Steuereinheit (11) ist;
wobei das Verfahren auf Ebene der zu steuernden Einheit die folgenden Schritte umfasst:

/a/ Generieren mindestens eines Zufallswerts r1;
/b/ Übertragen einer ersten Nachricht an die Steuereinheit, wobei die erste Nachricht mindestens einen kombinierten Wert x umfasst, der erhalten wird, indem der erste öffentliche Parameter g mit dem Zufallswert r1 kombiniert wird; und
/c/ Übertragen einer zweiten Nachricht an die Steuereinheit, wobei die zweite Nachricht einen kombinierten Wert y umfasst, der erhalten wird, indem der Zufallswert r1 mit einem geheimen Schlüssel s der zu steuernden Einheit, einem Wert c, der von der Steuereinheit empfangen wird, und dem zweiten öffentlichen Parameter $g^v$ kombiniert wird;
**dadurch gekennzeichnet, dass**:
der kombinierte Wert x und der kombinierte Wert y jeweils die folgenden Gleichungen erfüllen:

$$x = g^{2r1}$$

$$y = (g^v)^{r1}s^c$$

wobei das Verfahren ferner einen Schritt /d/ umfasst, in dem die zu steuernde Einheit auf Basis der folgenden Gleichung von der Steuereinheit gesteuert wird:

$$y^2 x^{-v} = J^c$$

wobei J ein öffentlicher Schlüssel der zu steuernden Einheit oder ein Wert in einer Datenbank ist, auf die von der Steuereinheit zugegriffen werden kann.

5. Verfahren zur Steuerung einer zu steuernden Einheit (12) von einer Steuereinheit (11);
wobei der Steuereinheit ein geheimer Schlüssel v zugeordnet ist;
wobei die zu steuernde Einheit und die Steuereinheit eine Vielzahl von öffentlichen Parametern (g, $g^v$) teilen, wobei ein zweiter öffentlicher Parameter $g^v$ der Vielzahl eine Kombination aus einem ersten öffentlichen Parameter g der Vielzahl und dem geheimen Schlüssel v der Steuereinheit (11) ist;
wobei das Verfahren auf Ebene der zu steuernden Einheit die folgenden Schritte umfasst:

/a/ Generieren mindestens eines Zufallswerts r1;
/b/ Übertragen einer ersten Nachricht an die Steuereinheit, wobei die erste Nachricht mindestens einen kombinierten Wert x umfasst, der erhalten wird, indem der erste öffentliche Parameter g mit dem Zufallswert r1 kombiniert wird; und
/c/ Übertragen einer zweiten Nachricht an die Steuereinheit, wobei die zweite Nachricht einen kombinierten Wert y umfasst, der erhalten wird, indem der Zufallswert r1 mit einem geheimen Schlüssel s der zu steuernden Einheit, einem Wert c, der von der Steuereinheit empfangen wird, und dem zweiten öffentlichen Parameter

$g^v$ kombiniert wird;

**dadurch gekennzeichnet, dass**:
der kombinierte Wert x und der kombinierte Wert y jeweils die folgenden Gleichungen erfüllen:

$$x = g^{Wr1}$$

$$y = (g^v)^{r1} s^c$$

wobei W ein öffentlicher Parameter ist, der der zu steuernden Einheit zugeordnet ist;
wobei das Verfahren ferner einen Schritt /d/ umfasst, in dem die zu steuernde Einheit auf Basis der folgenden Gleichung von der Steuereinheit gesteuert wird:

$$y^{-W} x^v = J^c$$

wobei J ein öffentlicher Schlüssel der zu steuernden Einheit oder ein Wert in einer Datenbank ist, auf die von der Steuereinheit zugegriffen werden kann.

6. Verfahren zur Steuerung einer zu steuernden Einheit (12) von einer Steuereinheit (11);
wobei der Steuereinheit ein geheimer Schlüssel v zugeordnet ist;
wobei die zu steuernde Einheit und die Steuereinheit eine Vielzahl von öffentlichen Parametern (g, $g^v$) teilen, wobei ein zweiter öffentlicher Parameter $g^v$ der Vielzahl eine Kombination aus einem ersten öffentlichen Parameter g der Vielzahl und dem geheimen Schlüssel v der Steuereinheit (11) ist;
wobei das Verfahren auf Ebene der zu steuernden Einheit die folgenden Schritte umfasst:

/a/ Generieren mindestens eines Zufallswerts r1;
/b/ Übertragen einer ersten Nachricht an die Steuereinheit, wobei die erste Nachricht mindestens einen kombinierten Wert x umfasst, der erhalten wird, indem der erste öffentliche Parameter g mit dem Zufallswert r1 kombiniert wird; und
/c/ Übertragen einer zweiten Nachricht an die Steuereinheit, wobei die zweite Nachricht einen kombinierten Wert y umfasst, der erhalten wird, indem der Zufallswert r1 mit einem geheimen Schlüssel s der zu steuernden Einheit, Zufallswerten $d_1$, ..., $d_m$, die von der Steuereinheit generiert und von ihr empfangen werden, und dem zweiten öffentlichen Parameter $g^v$ kombiniert wird;

wobei das Verfahren ferner einen Schritt /d/ umfasst, in dem die zu steuernde Einheit auf Basis der folgenden Gleichung von der Steuereinheit gesteuert wird:

$$y^{-W} x^v = G_1^{d_1} ... G_m^{d_m}$$

wobei $G_1$, $G_2$, ..., $G_m$ und W öffentliche Schlüssel der zu steuernden Einheit oder Werte in einer Datenbank sind, auf die von der Steuereinheit zugegriffen werden kann, wobei m eine positive ganze Zahl ist;

**dadurch gekennzeichnet, dass**:
der kombinierte Wert x und der kombinierte Wert y jeweils die folgenden Gleichungen erfüllen:

$$x = g^{Wr1}$$

$$y = (g^v)^{r1} Q_1^{d_1} ... Q_m^{d_m}$$

wobei $Q_1$, ..., $Q_m$ geheime Schlüssel der zu steuernden Einheit sind und die folgende Gleichung erfüllen:
$G_i Q_i^W = 1$, für i zwischen 1 und m.

7. Verfahren zur Steuerung, von einer Steuereinheit (11), mindestens einer zu steuernden Einheit (12);
wobei der Steuereinheit ein geheimer Schlüssel v zugeordnet ist;
wobei die zu steuernde Einheit und die Steuereinheit eine Vielzahl von öffentlichen Parametern (g, $g^v$) teilen, wobei ein zweiter öffentlicher Parameter $g^v$ der Vielzahl eine Kombination aus einem ersten öffentlichen Parameter g der Vielzahl und dem geheimen Schlüssel v der Steuereinheit (11) ist;
wobei das Verfahren auf Ebene der Steuereinheit die folgenden Schritte umfasst:

/a/ Empfangen einer ersten Nachricht von der zu steuernden Einheit, die mindestens einen kombinierten Wert x umfasst, der erhalten wird, indem der erste öffentliche Parameter g mit einem ersten Zufallswert (r1) kombiniert wird; wobei die erste Nachricht ferner einen Wert z umfasst, der auf dem zweiten öffentlichen Parameter $g^v$ und einem zweiten Zufallswert (r2) basiert; wobei der erste und zweite Zufallswert (r1, r2) vor Schritt /a/ an der zu steuernden Einheit generiert werden;
/b/ Generieren eines Zufallswerts c und Übertragen dieses Zufallswerts c an die zu steuernde Einheit (12);
/c/ Empfangen einer zweiten Nachricht von der zu steuernden Einheit (12), die mindestens einen kombinierten Wert y umfasst, der erhalten wird, indem der erste Zufallswert (r1), der an der zu steuernden Einheit generiert wird, mit einem geheimen Schlüssel der zu steuernden Einheit (s) und dem Zufallswert c kombiniert wird, der in Schritt /b/ generiert wird; **dadurch gekennzeichnet, dass**:

der kombinierte Wert x erhalten wird, indem der erste öffentliche Parameter zur Potenz des ersten Zufallswerts berechnet wird; der Wert z erhalten wird, indem der zweite öffentliche Parameter zur Potenz des zweiten Zufallswerts berechnet wird; der kombinierte Wert y erhalten wird, indem die folgenden Werte summiert werden: der erste Zufallswert, der zweite Zufallswert und das Produkt von dem geheimen Schlüssel der zu steuernden Einheit (s) und dem Wert c;

/d/ Steuern der zu steuernden Einheit (12) auf Basis der folgenden Gleichung:

$$J = ((g^v)^y \, x^{-v} \, z^{-1})^{1/vc}$$

wobei J ein öffentlicher Schlüssel der zu steuernden Einheit oder ein Wert in einer Datenbank ist, auf die von der Steuereinheit zugegriffen werden kann.

8. Steuerverfahren nach Anspruch 7, wobei der erste und zweite Zufallswert zwischen 0 und A-1 liegen; der Wert c, der von der Steuereinheit empfangen wird, zwischen 0 und B-1 liegt; und der geheime Schlüssel der zu steuernden Einheit zwischen 0 und S-1 liegt; wobei A, B und S öffentliche Parameter sind; und

wobei die zu steuernde Einheit ferner auf Basis der folgenden Ungleichung gesteuert wird:

$$0 \le y \le 2(A-1) + (B-1)(S-1)$$

9. Verfahren zur Steuerung, von einer Steuereinheit (11), mindestens einer zu steuernden Einheit (12); wobei der Steuereinheit ein geheimer Schlüssel v zugeordnet ist;

wobei die zu steuernde Einheit und die Steuereinheit eine Vielzahl von öffentlichen Parametern ($g_1$, $g_2$, $g_1^v$, $g_2^v$) teilen, wobei ein zweiter öffentlicher Parameter $g_1^v$ der Vielzahl eine Kombination aus einem ersten öffentlichen Parameter $g_1$ der Vielzahl und dem geheimen Schlüssel v der Steuereinheit (11) ist, wobei ein zweiter öffentlicher Parameter $g_2^v$ der Vielzahl eine Kombination aus einem ersten öffentlichen Parameter $g_2$ der Vielzahl und dem geheimen Schlüssel v der Steuereinheit (11) ist;

wobei das Verfahren auf Ebene der Steuereinheit die folgenden Schritte umfasst:

/a/ Empfangen einer ersten Nachricht von der zu steuernden Einheit, die mindestens einen kombinierten Wert x und einen Wert z umfasst; und

/b/ Generieren eines Zufallswerts c und Übertragen dieses Zufallswerts c an die zu steuernde Einheit (12);

/c/ Empfangen einer zweiten Nachricht von der zu steuernden Einheit (12), die mindestens einen kombinierten Wert $y_1$ und einen kombinierten Wert $y_2$ umfasst;

**dadurch gekennzeichnet, dass**:

der kombinierte Wert x und der Wert z jeweils die folgenden Gleichungen erfüllen:

$$x = g_1^{r1} \cdot g_2^{r2}$$

$$z = g_1^{vr'1} \cdot g_2^{vr'2}$$

wobei die kombinierten Werte $y_1$ und $y_2$ die jeweiligen Gleichungen erfüllen:

$$y_1 = r1 + s_1 c + r'1$$

$$y_2 = r2 + s_2 c + r'2$$

wobei $s_1$ und $s_2$ geheime Schlüssel der zu steuernden Einheit sind;

wobei r1, r2, r'1 und r'2 Zufallswerte sind, die vor Schritt /a/ an der zu steuernden Einheit generiert werden;

/d/ Steuern der zu steuernden Einheit (12) auf Basis der folgenden Gleichung:

$$J^{vc} = \frac{(g_1^v)^{y1}(g_2^v)^{y2}}{x^v z}$$

wobei J ein öffentlicher Schlüssel der zu steuernden Einheit oder ein Wert in einer Datenbank ist, auf die von der Steuereinheit zugegriffen werden kann.

10. Verfahren zur Steuerung, von einer Steuereinheit (11), mindestens einer zu steuernden Einheit (12); wobei der Steuereinheit ein geheimer Schlüssel v zugeordnet ist;

wobei die zu steuernde Einheit und die Steuereinheit eine Vielzahl von öffentlichen Parametern (g, $g^v$) teilen, wobei ein zweiter öffentlicher Parameter $g^v$ der Vielzahl eine Kombination aus einem ersten öffentlichen Parameter g der Vielzahl und dem geheimen Schlüssel v der Steuereinheit (11) ist;

wobei das Verfahren auf Ebene der Steuereinheit die folgenden Schritte umfasst:

/a/ Empfangen einer ersten Nachricht von der zu steuernden Einheit, die mindestens einen kombinierten Wert x umfasst, der erhalten wird, indem der erste öffentliche Parameter g mit einem Zufallswert r1 kombiniert wird; wobei der Zufallswert r1 vor Schritt /a/ an der zu steuernden Einheit generiert wird;

/b/ Generieren eines Zufallswerts c und Übertragen dieses Zufallswerts c an die zu steuernde Einheit (12);

/c/ Empfangen einer zweiten Nachricht von der zu steuernden Einheit (12), die mindestens einen kombinierten Wert y umfasst, der erhalten wird, indem der Zufallswert r1, der an der zu steuernden Einheit generiert wird, mit einem geheimen Schlüssel s der zu steuernden Einheit, dem Zufallswert c und dem zweiten öffentlichen Parameter $g^v$ kombiniert wird; **dadurch gekennzeichnet, dass**:

der kombinierte Wert x und der kombinierte Wert y jeweils die folgenden Gleichungen erfüllen:

$$x = g^{2r1}$$

$$y = (g^v)^{r1}s^c$$

/d/ Steuern der zu steuernden Einheit (12) auf Basis der folgenden Gleichung:

$$y^2 x^{-v} = J^c$$

wobei J ein öffentlicher Schlüssel der zu steuernden Einheit oder ein Wert in einer Datenbank ist, auf die von der Steuereinheit zugegriffen werden kann.

11. Verfahren zur Steuerung, von einer Steuereinheit (11), mindestens einer zu steuernden Einheit (12); wobei der Steuereinheit ein geheimer Schlüssel v zugeordnet ist; wobei die zu steuernde Einheit und die Steuereinheit eine Vielzahl von öffentlichen Parametern (g, $g^v$) teilen, wobei ein zweiter öffentlicher Parameter $g^v$ der Vielzahl eine Kombination aus einem ersten öffentlichen Parameter g der Vielzahl und dem geheimen Schlüssel v der Steuereinheit (11) ist; wobei das Verfahren auf Ebene der Steuereinheit die folgenden Schritte umfasst:

/a/ Empfangen einer ersten Nachricht von der zu steuernden Einheit, die mindestens einen kombinierten Wert x umfasst, der erhalten wird, indem der erste öffentliche Parameter g mit einem Zufallswert r1 kombiniert wird; wobei der Zufallswert r1 vor Schritt /a/ an der zu steuernden Einheit generiert wird;

/b/ Generieren eines Zufallswerts c und Übertragen dieses Zufallswerts c an die zu steuernde Einheit (12);

/c/ Empfangen einer zweiten Nachricht von der zu steuernden Einheit (12), die mindestens einen kombinierten Wert y umfasst, der erhalten wird, indem der Zufallswert r1, der an der zu steuernden Einheit generiert wird, mit einem geheimen Schlüssel s der zu steuernden Einheit, dem Zufallswert c und dem zweiten öffentlichen Parameter $g^v$ kombiniert wird; **dadurch gekennzeichnet, dass**:

der kombinierte Wert x und der kombinierte Wert y jeweils die folgenden Gleichungen erfüllen:

$$x = g^{Wr1}$$

$$y = (g^v)^{r1}s^c$$

wobei W ein öffentlicher Parameter ist, der der zu steuernden Einheit zugeordnet ist;

/d/ Steuern der zu steuernden Einheit (12) auf Basis der folgenden Gleichung:

$$y^{-W} x^v = J^c$$

wobei J ein öffentlicher Schlüssel der zu steuernden Einheit oder ein Wert in einer Datenbank ist, auf die von der Steuereinheit zugegriffen werden kann.

12. Verfahren zur Steuerung, von einer Steuereinheit (11), mindestens einer zu steuernden Einheit (12); wobei der Steuereinheit ein geheimer Schlüssel v zugeordnet ist; wobei die zu steuernde Einheit und die Steuereinheit eine Vielzahl von öffentlichen Parametern (g, $g^v$) teilen, wobei ein zweiter öffentlicher Parameter $g^v$ der Vielzahl eine Kombination aus einem ersten öffentlichen Parameter g der Vielzahl und dem geheimen Schlüssel v der Steuereinheit (11) ist; wobei das Verfahren auf Ebene der Steuereinheit die folgenden Schritte umfasst:

/a/ Empfangen einer ersten Nachricht von der zu steuernden Einheit, die mindestens einen kombinierten Wert x umfasst, der erhalten wird, indem der erste öffentliche Parameter g mit einem Zufallswert r1 kombiniert wird; wobei der Zufallswert r1 vor Schritt /a/ an der zu steuernden Einheit generiert wird;

/b/ Generieren von Zufallswerten $d_1$, ..., $d_m$ und Übertragen dieser Zufallswerte $d_1$, ..., $d_m$ an die zu steuernde Einheit (12);

/c/ Empfangen einer zweiten Nachricht von der zu steuernden Einheit (12), die mindestens einen kombinierten Wert y umfasst, der erhalten wird, indem der Zufallswert r1, der an der zu steuernden Einheit generiert wird, mit einem geheimen Schlüssel s der zu steuernden Einheit, den Zufallswerten $d_1$, ..., $d_m$ und dem zweiten öffentlichen Parameter $g^v$ kombiniert wird;

/d/ Steuern der zu steuernden Einheit (12) auf Basis der folgenden Gleichung:

$$y^{-W} x^v = G_1^{d_1} ... G_m^{d_m}$$

wobei $G_1$, $G_2$, ..., $G_m$ und W öffentliche Schlüssel der zu steuernden Einheit oder Werte in einer Datenbank sind, auf die von der Steuereinheit zugegriffen werden kann, wobei m eine positive ganze Zahl ist; **dadurch gekennzeichnet, dass**:

der kombinierte Wert x und der kombinierte Wert y jeweils die folgenden Gleichungen erfüllen:

$$x = g^{Wr1}$$

$$y = (g^v)^{r1} Q_1^{d_1} ... Q_m^{d_m}$$

wobei $Q_1$, ..., $Q_m$ geheime Schlüssel der zu steuernden Einheit sind und die folgende Gleichung erfüllen:

$$G_i Q_i^W = 1,$$ für i zwischen 1 und m.

13. Zu steuernde Einheit (12), die dazu angepasst ist, Informationen mit einer Steuereinheit (11) auszutauschen, und dazu angepasst ist, ein Steuerverfahren nach einem der Ansprüche 1 bis 6 durchzuführen.

14. Steuereinheit (11), die dazu angepasst ist, Informationen mit einer zu steuernden Einheit (12) auszutauschen, und dazu angepasst ist, ein Steuerverfahren nach einem der Ansprüche 7 bis 12 durchzuführen.

15. Steuersystem, umfassend eine Steuereinheit (11) nach Anspruch 14 und mindestens eine zu steuernde Einheit (12) nach Anspruch 13.

**Claims**

1. A method of checking an entity to be checked (12) by a checking entity (11);

a secret key v being associated with the checking entity;

said entity to be checked and said checking entity sharing a plurality of public parameters (g, $g^v$), a second public parameter $g^v$ of said plurality being a combination of a first public parameter g of said plurality with the secret key v of the checking entity (11);

said method comprising the following steps at the level of the entity to be checked:

/a/ generating first and second random values (r1, r2);

/b/ transmitting a first message to the checking entity, said first message comprising at least one combined value x obtained by combining the first public parameter g with the first random value, said first message comprising also a value z based on the second public parameter $g^v$ and the second random value (r2); and

/c/ transmitting a second message to the checking entity, said second message comprising at least one combined value y obtained by combining the first random value (r1), a secret key of the entity to be checked (s) and a value c received from the checking entity;

**characterized in that**:

the combined value x is obtained by calculating the first public parameter to the power of the first random value; the value z is obtained by calculating the second public parameter to the power of the second random value; the combined value y is obtained by summing the following values: the first random value, the second random value, and the product of the secret key of the entity to be checked (s) with the value c;

the method comprising also a step /d/ during which the entity to be checked is checked by the checking entity based on the following equation:

$$J = \left((g^v)^y \, x^{-v} \, z^{-1}\right)^{1/vc}$$

where J is a public key of the entity to be checked or a value in a database accessible from the checking entity.

2. The checking method according to claim 1, in which the first and second random values lie between 0 and A-1; the value c received from the checking entity lies between 0 and B-1; and the secret key of the entity to be checked lies between 0 and S-1; where A, B and S are public parameters; and
in which the entity to be checked is checked furthermore based on the following inequality:

$$0 \leq y \leq 2(A-1) + (B-1)(S-1)$$

3. A method of checking an entity to be checked (12) by a checking entity (11);
a secret key v being associated with the checking entity;
said entity to be checked and said checking entity sharing a plurality of public parameters ($g_1$, $g_2$, $g_1^v$, $g_2^v$), a second public parameter $g_1^v$ of said plurality being a combination of a first public parameter $g_1$ of said plurality with the secret key v of the checking entity (11), a second public parameter $g_2^v$ of said plurality being a combination of a first public parameter $g_2$ of said plurality with the secret key v of the checking entity (11);
said method comprising the following steps at the level of the entity to be checked:

/a/ generating random values r1, r2, r'1 and r'2;
/b/ transmitting a first message to the checking entity, said first message comprising at least one combined value x and a value z; and
/c/ transmitting a second message to the checking entity, said second message comprising at least one combined value $y_1$ and one combined value $y_2$;

**characterized in that**:
the combined value x and the value z respectively satisfy the following equations:

$$x = g_1^{r1} \cdot g_2^{r2}$$

$$z = g_1^{vr'1} \cdot g_2^{vr'2}$$

wherein the combined values $y_1$ and $y_2$ satisfy the respective equations:

$$y_1 = r1 + s_1c + r'1$$

$$y_2 = r2 + s_2c + r'2$$

where $s_1$ and $s_2$ are secret keys of the entity to be checked;
where c is a value received from the checking entity;

the method comprising also a step /d/ during which the entity to be checked is checked by the checking entity based on the following equation:

$$J^{vc} = \frac{(g_1^v)^{y1}(g_2^v)^{y2}}{x^v z}$$

where J is a public key of the entity to be checked or a value in a database accessible from the checking entity.

4. A method of checking an entity to be checked (12) by a checking entity (11);
a secret key v being associated with the checking entity;
said entity to be checked and said checking entity sharing a plurality of public parameters (g, $g^v$), a second public parameter $g^v$ of said plurality being a combination of a first public parameter g of said plurality with the secret key v of the checking entity (11);
said method comprising the following steps at the level of the entity to be checked:

/a/ generating at least one random value r1;
/b/ transmitting a first message to the checking entity, said first message comprising at least one combined value x obtained by combining the first public parameter g with the random value r1; and
/c/ transmitting a second message to the checking entity, said second message comprising at least one combined value y obtained by combining the random value r1, a secret key s of the entity to be checked, a value c received from the checking entity and the second public parameter $g^v$;

**characterized in that**:
the combined value x and the combined value y respectively satisfy the following equations:

$$x = g^{2r1}$$

$$y = (g^v)^{r1}s^c$$

the method comprising also a step /d/ during which the entity to be checked is checked by the checking entity based on the following equation:

$$y^2 x^{-v} = J^c$$

where J is a public key of the entity to be checked or a value in a database accessible from the checking entity.

**5.** A method of checking an entity to be checked (12) by a checking entity (11);
a secret key v being associated with the checking entity;
said entity to be checked and said checking entity sharing a plurality of public parameters $(g, g^v)$, a second public parameter $g^v$ of said plurality being a combination of a first public parameter g of said plurality with the secret key v of the checking entity (11);
said method comprising the following steps at the level of the entity to be checked:

/a/ generating at least one random value r1;
/b/ transmitting a first message to the checking entity, said first message comprising at least one combined value x obtained by combining the first public parameter g with the random value r1; and
/c/ transmitting a second message to the checking entity, said second message comprising at least one combined value y obtained by combining the random value r1, a secret key s of the entity to be checked, a value c received from the checking entity and the second public parameter $g^v$;

**characterized in that**:
the combined value x and the combined value y respectively satisfy the following equations:

$$x = g^{Wr1}$$

$$y = (g^v)^{r1}\, s^c$$

where W is a public parameter associated with the entity to be checked;
the method comprising also a step /d/ during which the entity to be checked is checked by the checking entity based on the following equation:

$$y^{-W} x^v = J^c$$

where J is a public key of the entity to be checked or a value in a database accessible from the checking entity.

**6.** A method of checking an entity to be checked (12) by a checking entity (11);
a secret key v being associated with the checking entity;
said entity to be checked and said checking entity sharing a plurality of public parameters $(g, g^v)$, a second public parameter $g^v$ of said plurality being a combination of a first public parameter g of said plurality with the secret key v of the checking entity (11);

said method comprising the following steps at the level of the entity to be checked:

/a/ generating at least one random value r1;
/b/ transmitting a first message to the checking entity, said first message comprising at least one combined value x obtained by combining the first public parameter g with the random value r1; and
/c/ transmitting a second message to the checking entity, said second message comprising at least one combined value y obtained by combining the random value r1, a secret key s of the entity to be checked, random values $d_1, ..., d_m$ generated by and received from the checking entity, and the second public parameter $g^v$;

the method comprising also a step /d/ during which the entity to be checked is checked by the checking entity based on the following equation:

$$y^{-W} x^v = G_1^{d_1} ... G_m^{d_m}$$

where $G_1, G_2, ..., G_m$ and W are public keys of the entity to be checked or values in a database accessible from the checking entity, where m is a positive integer;
**characterized in that**:
the combined value x and the combined value y respectively satisfy the following equations:

$$x = g^{Wr1}$$

$$y = (g^v)^{r1} Q_1^{d_1} ... Q_m^{d_m}$$

where $Q_1, ..., Q_m$ are secret keys of the entity to be checked and satisfy the following equation:
$G_i\, Q_i^W = 1$, for i lying between 1 and m.

**7.** A method of checking by a checking entity (11) of at least one entity to be checked (12),
a secret key v being associated with the checking entity;
said entity to be checked and said checking entity sharing a plurality of public parameters $(g, g^v)$, a second public parameter $g^v$ of said plurality being a combination of a first public parameter g of said plurality with the secret key v of the checking entity (11);
said method comprising the following steps at the level of the checking entity:

/a/ receiving from the entity to be checked a first message comprising at least one combined value x obtained by combining the first public parameter g and a first random value (r1), said first message comprising also a value z based on the second public parameter $g^v$ and a second random value (r2); the first and second random values (r1, r2) being generated at the level of the entity to be checked before step /a/;

/b/ generating a random value c and transmitting this random value c to the entity to be checked (12);

/c/ receiving from the entity to be checked (12) a second message comprising at least one combined value y obtained by combining the first random value (r1) generated at the level of the entity to be checked, a secret key of the entity to be checked (s) and said random value c generated in step /b/;

**characterized in that**:

the combined value x is obtained by calculating the first public parameter to the power of the first random value; the value z is obtained by calculating the second public parameter to the power of the second random value; the combined value y is obtained by summing the following values: the first random value, the second random value, and the product of the secret key of the entity to be checked (s) with the value c;

/d/ checking the entity to be checked based on the following equation:

$$J = ((g^v)^y \, x^{-v} \, z^{-1})^{1/vc}$$

where J is a public key of the entity to be checked or a value in a database accessible from the checking entity.

8. The checking method according to claim 7, in which the first and second random values lie between 0 and A-1; the value c received from the checking entity lies between 0 and B-1; and the secret key of the entity to be checked lies between 0 and S-1; where A, B and S are public parameters; and

in which the entity to be checked is checked furthermore based on the following inequality:

$$0 \leq y \leq 2(A-1) + (B-1)(S-1)$$

9. A method of checking by a checking entity (11) of at least one entity to be checked (12), a secret key v being associated with the checking entity;

said entity to be checked and said checking entity sharing a plurality of public parameters ($g_1$, $g_2$, $g_1^v$, $g_2^v$), a second public parameter $g_1^v$ of said plurality being a combination of a first public parameter $g_1$ of said plurality with the secret key v of the checking entity (11), a second public parameter $g_2^v$ of said

plurality being a combination of a first public parameter $g_2$ of said plurality with the secret key v of the checking entity (11);

said method comprising the following steps at the level of the checking entity:

/a/ receiving from the entity to be checked a first message comprising at least one combined value x and a value z; and

/b/ generating a random value c and transmitting this random value c to the entity to be checked (12);

/c/ receiving from the entity to be checked (12) a second message comprising at least one combined value $y_1$ and one combined value $y_2$;

**characterized in that**:

the combined value x and the value z respectively satisfy the following equations:

$$x = g_1^{r1} \cdot g_2^{r2}$$

$$z = g_1^{vr'1} \cdot g_2^{vr'2}$$

wherein the combined values $y_1$ and $y_2$ satisfy the respective equations:

$$y_1 = r1 + s_1 c + r'1$$

$$y_2 = r2 + s_2 c + r'2$$

where $s_1$ and $s_2$ are secret keys of the entity to be checked;

where r1, r2, r'1, r'2 are random values generated at the level of the entity to be checked before step /a/;

/d/ checking the entity to be checked based on the following equation:

$$J^{vc} = \frac{(g_1^v)^{y1}(g_2^v)^{y2}}{x^v z}$$

where J is a public key of the entity to be checked or a value in a database accessible from the checking entity.

10. A method of checking by a checking entity (11) of at least one entity to be checked (12), a secret key v being associated with the checking entity;

said entity to be checked and said checking entity sharing a plurality of public parameters (g, $g^v$), a second public parameter $g^v$ of said plurality being a combination of a first public parameter g of said plurality with the secret key v of the checking entity (11); said method comprising the following steps at the level of the checking entity:

/a/ receiving from the entity to be checked a first message comprising at least one combined value x obtained by combining the first public parameter g with a random value r1; the random value r1 being generated at the level of the entity to be checked before step /a/;

/b/ generating a random value c and transmitting this random value c to the entity to be checked (12);

/c/ receiving from the entity to be checked (12) a second message comprising at least one combined value y obtained by combining the random value r1 generated at the level of the entity to be checked, a secret key s of the entity to be checked, the random value c and the second public parameter $g^v$;

**characterized in that**:

the combined value x and the combined value y respectively satisfy the following equations:

$$x = g^{2r1}$$

$$y = (g^v)^{r1} s^c$$

/d/ checking the entity to be checked based on the following equation:

$$y^2 x^{-v} = J^c$$

where J is a public key of the entity to be checked or a value in a database accessible from the checking entity.

11. A method of checking by a checking entity (11) of at least one entity to be checked (12), a secret key v being associated with the checking entity; said entity to be checked and said checking entity sharing a plurality of public parameters $(g, g^v)$, a second public parameter $g^v$ of said plurality being a combination of a first public parameter g of said plurality with the secret key v of the checking entity (11); said method comprising the following steps at the level of the checking entity:

/a/ receiving from the entity to be checked a first message comprising at least one combined value x obtained by combining the first public parameter g with a random value $r_1$; wherein the random value $r_1$ is generated at the level of the entity to be checked before step /a/;

/b/ generating a random value c and transmitting this random value c to the entity to be checked (12);

/c/ receiving from the entity to be checked (12) a second message comprising at least one combined value y obtained by combining the random value $r_1$ generated at the level of the entity to be checked, a secret key s of the entity to be checked, the random value c and the second public parameter $g^v$;

**characterized in that**:

the combined value x and the combined value y respectively satisfy the following equations:

$$x = g^{Wr1}$$

$$y = (g^v)^{r1} s^c$$

where W is a public parameter associated with the entity to be checked;

/d/ checking the entity to be checked based on the following equation:

$$y^{-W} x^v = J^c$$

where J is a public key of the entity to be checked or a value in a database accessible from the checking entity.

12. A method of checking by a checking entity (11) of at least one entity to be checked (12), a secret key v being associated with the checking entity; said entity to be checked and said checking entity sharing a plurality of public parameters $(g, g^v)$, a second public parameter $g^v$ of said plurality being a combination of a first public parameter g of said plurality with the secret key v of the checking entity (11); said method comprising the following steps at the level of the checking entity:

/a/ receiving from the entity to be checked a first message comprising at least one combined value x obtained by combining the first public parameter g with a random value r1; the random value r1 being generated at the level of the entity to be checked before step /a/;

/b/ generating random values $d_1, ..., d_m$ and transmitting these random values $d_1, ..., d_m$ to the entity to be checked (12);

/c/ receiving from the entity to be checked (12) a second message comprising at least one combined value y obtained by combining the random value r1 generated at the level of the entity to be checked, a secret key s of the entity to be checked, the random values $d_1$, ..., $d_m$ and the second public parameter $g^v$;

/d/ checking the entity to be checked based on the following equation:

$$y^{-W}x^v = G_1^{d_1} \ldots G_m^{d_m}$$

where $G_1$, $G_2$, ..., $G_m$ and W are public keys of the entity to be checked or values in a database accessible from the checking entity, where m is a positive integer;

**characterized in that**:

the combined value x and the combined value y respectively satisfy the following equations:

$$x = g^{Wr1}$$

$$y = (g^v)^{r1}Q_1^{d_1} \ldots Q_m^{d_m}$$

where $Q_1$, ..., $Q_m$ are secret keys of the entity to be checked and satisfy the following equation: $G_i Q_i^W = 1$, for i lying between 1 and m.

13. An entity to be checked (12) suitable for exchanging information with a checking entity (11), and suitable for implementing a checking method according to any one of claims 1 to 6.

14. A checking entity (11) suitable for exchanging information with an entity to be checked (12), and suitable for implementing a checking method according to any one of claims 7 to 12.

15. A checking system comprising a checking entity (11) according to claim 14 and at least one entity to be checked (12) according to claim 13.

FIG. 1

FIG. 2

FIG. 3

**EP 2 225 849 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 03055134 A

### Littérature non-brevet citée dans la description

- **VAUDENAY, S. ; VUAGNOUX, M.** About machine-readable travel documents. *nal of Physics: Conférence Series,* Juillet 2007, vol. 77 (1), 012006
- Technical Guideline - Advanced Security Mechanisms for Machine Readable Travel Documents - Extended Access Control (EAC), Version 1.0. *TR-03110, Federal Office for Information Security (BSI)*
- **SCHNORR.** Efficient signature génération by smart cards. *de Journal of Cryptology,* 1991
- **GIRAULT.** *Poupard, Stern du Journal of Cryptology,* 2006
- **T. OKAMOTO.** *Provably secure and practical identification schemes and corresponding signature schemes,* 1992
- **FIAT ; SHAMIR.** How to prove yourself : pratical solutions of identification and signature problems. *Proceedings of Crypto,* 1986
- A modification of the Fiat Shamir scheme. *Proceedings of Crypto,* 1988
- A paradoxical identity-based signature scheme resulting from Zero-Knowledge minimizing both transmission and memory. *Proceedings of Crypto,* 1988
- The new Guillou-Quisquater scheme. *RSA 2000 conférence*
- **H. ONG ; C. SCHNORR.** Fast signature génération with a Fiat Shamir like scheme. *Eurocrypt,* 1990